# EUROPÄISCHE PATENTSCHRIFT

(11) **EP 2 001 284 B1**
(45) Veröffentlichungstag und Bekanntmachung des Hinweises auf die Patenterteilung: **30.05.2012**
(21) Anmeldenummer: 07723534.9
(22) Anmeldetag: 23.03.2007
(51) Int. Cl.: A01K 31/16, B65G 43/08, B65G 43/10, B65G 47/76

(54) **FÖRDERBANDSTEUERUNG MIT KRAFTSENSOR**
CONVEYOR CONTROL WITH FORCE SENSOR
COMMANDE D'UNE BANDE TRANSPORTEUSE A CAPTEUR DE FORCE

(30) Priorität: 24.03.2006 DE 202006004894 U
(43) Veröffentlichungstag der Anmeldung: 17.12.2008
(60) Teilanmeldung: 10183810.0
(73) Patentinhaber: Big Dutchman International GmbH, 49377 Vechta (DE)
(72) Erfinder: SÜDKAMP, Heinz, 49413 Dinklage (DE); Kalkhoff, Christian, 49377 Vechta (DE)
(74) Vertreter: Eisenführ, Speiser & Partner
(86) Internationale Anmeldenummer: PCT/EP2007/002584
(87) Internationale Veröffentlichungsnummer: WO 2007/110201

(56) Entgegenhaltungen:
- DE-A1- 2 155 120
- DE-A1- 2 313 663
- DE-A1- 3 607 858
- FR-A3- 2 322 809
- GB-A- 2 047 649
- US-A- 3 247 929
- US-A- 3 738 077
- US-A- 4 086 998
- US-A- 4 226 211
- US-A- 5 046 570
- US-A- 5 304 745
- US-A- 5 551 822
- US-A1- 2004 112 713

## Beschreibung

Die Erfindung betrifft eine Förderanordnung nach dem Oberbegriff von Anspruch 1.

Solche Förderanordnungen werden beispielsweise eingesetzt, um Eier von einem Legebereich weg zu transportieren und einer Verpackungsstation zuzuführen. Hierzu werden insbesondere Förderanordnungen verwendet, welche ein Querförderband, welches Produkte zu einer Verarbeitungsstation fördert, und mehrere Längsförderbänder, die so angeordnet sind, dass sie Produkte von verschiedenen, voneinander beabstandeten Orten auf das Querförderband befördern, umfassen. Die Längsförderbänder erstrecken sich hierbei entlang einer Stall- oder Volierenreihe und sind in der Regel für jede Etage einzeln vorgesehen. Die Querförderbänder sind typischerweise rechtwinklig zu den parallel angeordneten Längsförderbändern montiert und nehmen die von den Längsförderbändern aus den Legebereichen transportierten Eier auf.

Ein erstes Problem, was bei solchen Förderanordnungen auftritt, besteht darin, dass durch die sich zeitlich erstreckende Förderung der Eier auf den Längsförderbändern die Zufuhr der Eier über das Querförderband zu der Verarbeitungsstation diskontinuierlich und insbesondere in einer nicht ausreichenden Menge erfolgt, um die Verarbeitungskapazität der Verarbeitungsstation auszulasten. Um dies zu vermeiden, ist es bekannt, mehrere Längsförderbänder gleichzeitig zu aktivieren, um das Querförderband mit einer ausreichenden Menge von Eiern zu versorgen. Ein Problem bei dieser Vorgehensweise liegt jedoch darin, dass durch die beabstandete Einmündung der Längsförderbänder das Querförderband nicht gleichmäßig ausgelastet werden kann und lokale Überschreitungen der Querförderbandkapazitäten erfolgen, was regelmäßig zu Beschädigungen der Eier führt.

Ein weiteres Problem bei Förderanordnungen dieser Art besteht darin, dass zu Beginn des Fördervorgangs und zum Ende des Fördervorgangs nur kleine Förderraten der Eier realisiert werden, da durch Anlauf des ersten Längsförderbands und Auslauf des letzten Längsförderbandes eine zu geringe Zulieferung auf das Querförderband erfolgt. Hierdurch verlängert sich die Verarbeitungszeit an der Verarbeitungsstation, was aus Kostengründen nachteilhaft ist.

Insbesondere in größeren Stallanlagen ist es oftmals erwünscht, die Eier aus bestimmten Stellen gruppenweise einzusammeln, beispielsweise weil in bestimmten Ställen ein anderes Futter verabreicht wird als in anderen Ställen und die auf diese Weise produzierten Eier sollen als zusammenhängender Block der Verarbeitungsstation zugeführt werden, um gemeinsam verarbeitet, beispielsweise verpackt zu werden. In gerade solchen Fällen, wo der Eiersammelvorgang mit beispielsweise bis zu 15 unterschiedlichen Gruppen aufeinanderfolgend stattfindet, ist jedoch eine jederzeitige Auslastung der Verarbeitungskapazität der Verarbeitungsstation mit den bisher bekannten Maßnahmen, verschiedene Längsförderbänder gleichzeitig einzuschalten, nicht erreichbar, so dass in solchen Anwendungsfällen erheblich längere Betriebszeiten der Verarbeitungsstation und folglich längere Sammelzeiten und höhere Betriebskosten in Kauf genommen werden müssen.

Ein weiteres Problem bei solchen Förderanordnungen entsteht insbesondere durch die tierfreundliche Volierenhaltung von Legehennen. Bei der Volierenhaltung wird den Tieren ein Nest angeboten, in dem die Tiere bevorzugt die Eier legen. Aus dem Nest rollen die Eier auf das Längsförderband. Durch die lokal konzentrierte Häufung der gelegten Eier kommt es jedoch im Nestbereich zu einer Überfüllung des Längsförderbands, was zu Beschädigungen der Eier führen kann. Während es bei der Käfighaltung zu einer Verteilung der gelegten Eier über die gesamte Käfigbreite kommt und folglich eine einmalige Aktivierung der Längsförderbänder am Tag zum Einsammeln der gelegten Eier genügte, ist es bei der Volierenhaltung erforderlich, den Sammelvorgang mehrmals täglich durchzuführen aufgrund der lokalen Überfüllung der Längsförderbänder.

Noch ein weiteres Problem bei solchen Förderanordnungen besteht darin, dass durch Stockungen oder Verarbeitungsprobleme vor bzw. in der Verarbeitungsstation ein Stau entstehen kann und hierdurch hohe Kräfte auf die Eier einwirken können. Es ist bekannt, zur Vermeidung dieses Problems einen durch die Eiansammlung betätigten Endschalter vorzusehen, der das Querförderband bei Auftreten einer unzulässig hohen Kraft abschaltet. Dies führt jedoch, insbesondere unter dem Gesichtspunkt, dass eine Ausnutzung der vollen Kapazität der Verarbeitungsstation gewünscht ist und folglich ein gewisser Stau vor der Verarbeitungsstation als Puffer angestrebt wird, zu einer sehr häufigen An- und Abschaltung des Querförderbands, was einen erhöhten Verschleiß und vorzeitigen Ausfall bewirken kann.

Schließlich besteht ein weiteres Problem bekannter Fördervorrichtungen darin, dass bei Zuförderung von Produkten aus mehreren Förderbändern auf ein gemeinsames Sammelförderband oftmals Beschädigungen der Produkte auftreten, wenn die zusätzlich hinzugeförderten Produkte zunächst die bereits auf dem Sammelförderband befindlichen Produkte verdrängen müssen und hierbei unzulässig hohe Kräfte zwischen den Produkten wirken. Es ist bekannt, zur Vermeidung solcher Beschädigungen zur Bewegung des Sammelförderbands ortsfest befestigte Produktleiteinrichtungen vorzusehen, welche die bereits auf dem Sammelförderband befindlichen Produkte vor den Einmündungsbereichen weiterer Produkte so zu leiten, dass sie vom Einmündungsbereich weggeführt werden und hierdurch Platz für die zusätzlich hinzukommenden Produkte geschaffen wird. Diese Produktleiteinrichtungen müssen insbesondere bei sich ändernden Zuförderbedingungen, sei es durch Zuförderung aus unterschiedlichen Zuförderbändern oder sich ändernden Zuförderquoten, regelmäßig unterschiedlich platziert und eingestellt werden, was deren Handhabung erschwert.

Aus FR 7623628 ist eine Vorrichtung zur Verbringung von Eiern auf eine Sortiereinrichtung bekannt. Die Sortiereinrichtung umfasst ein Förderband, welches einseitig auf einem Gewichtsbelasteten Hebel aufgelagert ist und bei zunehmender Beladung gegen diese Gewichtskraft absinkt, um einen elektrischen Schalter zu betätigen.

Aus US 3,738,077 ist eine Wiegevorrichtung für eine abgeteilte Menge bekannt, die ein als Waage ausgebildetes Förderband umfasst.

Der Erfindung liegt die Aufgabe zugrunde, eine Förderanordnung bereitzustellen, welche eines und vorzugsweise mehrere der vorgenannten Probleme vermeidet.

Dies wird erfindungsgemäß durch eine Förderanordnung nach Anspruch 1 erreicht.

Durch die Erfindung wird es ermöglicht, eine differenzierte Ansteuerung der abführenden bzw. zuführenden Fördervorrichtungen in Abhängigkeit der für die Beschädigung der Produkte verantwortlichen Kraft zu erzielen. Auf diese Weise kann die angestrebte Auffüllung des Zwischenspeicherbereichs, beispielsweise um eine Verarbeitungsstation zu speisen oder um Produkte aus einem Produktionsbereich aufzunehmen, gezielt erfolgen und somit eine Auffüllung ohne häufige Starten und Stoppen der Fördervorrichtung erreicht werden.

Dabei ist es besonders bevorzugt, wenn die Steuerungsvorrichtung ausgebildet ist, um die Fördervorrichtung mit einer ersten und einer zweiten Fördergeschwindigkeit anzusteuern, wobei die zweite Geschwindigkeit höher ist als die erste Geschwindigkeit. Auf diese Weise kann in Abhängigkeit des Kraftmesswerts eine entsprechende Geschwindigkeit gewählt werden, um die Anzahl der Produkte im Zwischenspeicherbereich zu erhöhen oder zu verringern. So kann bei Abnahme der erfassten Kraft die zweite Geschwindigkeit gewählt werden und bei Zunahme der erfassten Kraft die erste Geschwindigkeit. Weiterhin kann die erste und zweite Geschwindigkeit bei Unterschreitung bzw. Überschreitung vorbestimmter Kraftgrenzwerte eingestellt werden.

Insbesondere ist es bevorzugt, wenn die Steuerungsvorrichtung ausgebildet ist, um die Fördervorrichtung vorzugsweise stufenlos in Abhängigkeit der von der Kraftmessvorrichtung erfassten Kraft einzustellen. Die stufenlose Steuerung der Fördervorrichtung erlaubt eine sehr exakte Regelung der Anzahl der Produkte im Zwischenspeicherbereich bzw. der dort auftretenden Kraft zwischen den Produkten.

Erfindungsgemäβß ist die Steuerurigsvorrichtung ausgebildet, um bei Überschreiten eines vorbestimmten Kraftwerts die Zufuhr der Produkte zum Zwischenspeicherbereich zu verringern und/oder die Abfuhr aus dem Zwischenspeicherbereich zu erhöhen. Auf diese Weise wird eine einfache und zuverlässige Steuerung oder Regelung der Produktförderung erzielt.

Weiterhin erfindungsgemäß ist die Kraftmessvorrichtung unterhalb der Produkte im Zwischenspeicherbereich angeordnet, um in vertikaler Richtung zu messen und die summierte Gewichtskraft der Produkte im Zwischenspeicherbereich zu erfassen. Diese Fortbildung eignet sich insbesondere dazu, um im Bereich eines Nestes bei Volierenhaltung eingesetzt zu werden. Die Kraftmessvorrichtung kann dabei so angeordnet sein, dass sie die Gewichtskraft der auf dem Längsband im Bereich des Nestes befindlichen Eier misst und bei Überschreitung einer vorbestimmten Gewichtskraft eine Förderung des Längsförderbands veranlasst wird, um eine Aufstauung der Eier zu vermeiden.

Dabei ist es insbesondere bevorzugt, wenn die Kraftmessvorrichtung mit einer horizontal angeordneten Wiegeplatte gekoppelt ist, die unterhalb eines Förderbands angeordnet ist, auf dem die Produkte im Zwischenspeicherbereich angeordnet sind. So wird auf zuverlässige und konstruktiv robuste Weise die Wiegung der gesamten Produkte im Zwischenspeicherbereich erzielt.

Insbesondere ist es bevorzugt, wenn die Steuerungsvorrichtung ausgebildet ist, um die Fördervorrichtung aus einem Stillstand heraus bei Überschreiten einer vorbestimmten summierten Gewichtskraft der Produkte im Zwischenspeicherbereich so anzusteuern, dass die Produkte soweit weitergefördert werden, dass alle Produkte aus dem Zwischenspeicherbereich gefördert werden. So wird in Abhängigkeit der im Zwischenspeicherbereich befindlichen Produkte eine Förderung, partiell oder vollständig veranlasst und eine Stauung kann vermieden werden.

Besonders bevorzugt ist es, wenn die Fördervorrichtung ein Förderband umfasst, auf dem sich der Zwischenspeicherbereich um eine bestimmte Länge erstreckt, und die Steuerungsvorrichtung so ausgebildet ist, dass das Förderband bei Überschreiten einer vorbestimmten summierten Gewichtskraft der Produkte im Zwischenspeicherbereich um genau die Länge des Zwischenspeichers weitergefördert wird. Bei dieser Fortbildung wird das Förderband bei vollständiger Auffüllung des Zwischenspeicherbereichs nur soweit vorgezogen, dass die hierauf folgende Auffüllung des Förderbands in einem unmittelbar an den zuvor aufgefüllten Bereich angrenzenden Bereich erfolgt und auf diese Weise nach und nach eine vollständige Auffüllung des Längsförderbands über einen großen Bereich erzielt.

Erfindungsgemäβ ist Fördevranordnung so fortgebildet, dass entlang des Förderbands mehrere voneinander beabstandete Zwischenspeicherbereiche angeordnet sind und die Steuerungsvorrichtung so ausgebildet ist, dass das Förderband bei einem erstmaligen Überschreiten einer vorbestimmten summierten Gewichtskraft der Produkte in einem Zwischenspeicherbereich um die Länge des Zwischenspeichers weitergefördert wird, bei einem nachfolgenden Überschreiten einer vorbestimmten summierten Gewichtskraft der Produkte im Zwischenspeicherbereich nochmals um die Länge des Zwischenspeichers weitergefördert wird, sich dieser Vorgang gfs wiederholt bis zu einer vorbestimmten Wiederholungsanzahl, bei der ein mit Produkten belegter Abschnitt des Förderbands in einen benachbarten Zwischenspeicherbereich gefördert würde und bei der stattdessen das Förderband solange angetrieben wird, bis die Produkte vom Förderband auf eine zweite Fördervorrichtung oder in einen Speicherraum gefördert sind.

Bei dieser Ausführungsform erfolgt bei Einsatz der Förderanordnung als Längsförderband ein mehrmaliger Vorschub des Längsförderbands um einen diskreten Vorschubweg, welcher der Länge des Zwischenspeicherbereichs entspricht. So werden zeitlich aufeinanderfolgend benachbarte Bereiche auf dem Längsförderand aufgefüllt. Da üblicherweise mehrere Nestbereiche entlang des Längsförderbands angeordnet sind, würde nach einer bestimmten Anzahl solcher diskreten Vorschübe ein von einem benachbarten Nestbereich aufgefüllter Längsförderbandabschnitt in den Nestbereich einer nebenliegenden Voliere gefördert und in diesem Fall würde die Gefahr bestehen, dass eine Aufstauung der Eier erfolgt, da kein freier Längsförderbandbereich mehr zur Verfügung steht. Daher wird zu einem solchen Zeitpunkt, zu dem das Längsförderband typischerweise vollständig befüllt ist, eine Daueraktivierung des Längsförderbands veranlasst, um die Eier in einen Speicherraum, beispielsweise auf ein Querförderband zu fördern.

Die Förderanordnung kann weiter fortgebildet werden, indem mehrere Förderbänder mit jeweils zumindest einem Zwischenspeicherbereich angeordnet sind, wobei zumindest ein Zwischenspeicherbereich einen Kraftsensor zum Messen der Gewichtskraft der Produkte in diesem Zwischenspeicherbereich umfasst und die Steuerungsvorrichtung so ausgebildet ist, dass alle Förderbänder bei einem Überschreiten einer vorbestimmten summierten Gewichtskraft der Produkte in diesem Zwischenspeicherbereich um die Länge des Zwischenspeichers weitergefördert wird. Diese Anordnung eignet sich insbesondere für mehrere Ställe und beruht auf der Erkenntnis, dass typischerweise jede Voliere eine ähnliche Legeleistung aufweist, so dass es genügt, wenn nur im Bereich des Nestes einer Voliere die gelegten Eier gewogen werden und bei Überschreitung eines bestimmten Wertes in diesem Bereich dann alle Förderbänder vorgezogen werden. Diese Anordnung kann weiter fortgebildet werden, indem mehrere Förderbänder mit jeweils zumindest einem Zwischenspeicherbereich angeordnet sind, zumindest mehrere Zwischenspeicherbereiche einen Kraftsensor zum Messen der Gewichtskraft der Produkte in diesem Zwischenspeicherbereich umfassen und die Steuerungsvorrichtung so ausgebildet ist, dass alle Förderbänder um die Länge des Zwischenspeichers weitergefördert werden, wenn die Gewichtskraft der Produkte in einem Zwischenspeicherbereich mit Kraftsensor oder der Mittelwert der Gewichtskraft der Produkte in allen Zwischenspeicherbereichen mit Kraftsensor eine vorbestimmte Gewichtskraft der Produkte überschreitet. Bei dieser Ausführungsform wird eine größere Sicherheit gegenüber Unregelmäßigkeiten in der Legeleistung erzielt, indem die gelegten Eier mehrerer Volieren gemessen werden und in Abhängigkeit dieser Messwerte dann alle Längsförderbänder vorgezogen werden.

Bei einer besonders bevorzugten Ausführungsform der erfindungsgemäßen Förderanordnung ist die Kraftmessvorrichtung mit einem beweglichen Wandabschnitt gekoppelt, um die durch die Produkte auf den beweglichen Wandabschnitt ausgeübte horizontale Flächenpressung als Druckkraft auf den beweglichen Abschnitt zu erfassen. Diese Fortbildung eignet sich insbesondere dazu, um im Bereich vor einer Packstation die vom Querförderband geförderten Eier zu überwachen und Beschädigungen dieser Eier zu vermeiden, wenn Stauungen in der Packstation auftreten. Die Erfassung einer differenzierten Druckkraft erlaubt eine präzise Steuerung der Eierzufuhr und vermeidet Beschädigung oder einen sich häufig wiederholenden Stopp- und Anlaufvorgang des Querförderbands.

Dabei ist es besonders bevorzugt, wenn die Kraftmessvorrichtung mit einem beweglichen Wandabschnitt gekoppelt ist, um die durch die Produkte auf den beweglichen Wandabschnitt ausgeübte horizontale Flächenpressung als Druckkraft auf den beweglichen Abschnitt zu erfassen. Mit dieser Fortbildung wird eine präzise Messung der Druckkraft erreicht und somit eine für die Steuerung bzw. Regelung zuverlässige Eingangsgröße generiert. Dabei können alternativ mehrere Kraftmessvorrichtungen mit jeweils einem beweglichen Wandabschnitt vorgesehen sein, die beispielsweise seitlich und gegenüberliegend zu den durchgeförderten Produkten liegen können oder auch als Messinsel im Produktstrom angeordnet sein können.

Die Ausführungsformen mit horizontalmessendem Kraftsensor können weiter fortgebildet werden, indem der bewegliche Wandabschnitt einen ersten Wandflächenbereich aufweist, der entgegen der Zufördervorrichtung in den Zwischenspeicherbereich weist und einen zweiten Wandflächenbereich aufweist, der parallel zur Zufördervorrichtung weist. Es hat sich erwiesen, dass durch die Bereitstellung solcher zweier Wandflächenbereiche eine für die Ermittlung der tatsächlichen Produktbelastung günstige Erfassung der Förderkraft in Förderrichtung und der hierdurch erzeugten Kraft quer zur Förderrichtung erreicht wird, die eine direkt im Verhältnis zu der Gefahr der Produktbeschädigung stehende Eingangsgröße für die Regelung bzw. Steuerung darstellt.

Dabei kann der bewegliche Wandabschnitt insbesondere eine halbrunde Form aufweisen. So ist eine bevorzugte Lösung ein halbrunder Wandabschnitt, der an einem Ende schwenkbar gelagert ist und beabstandet von diesem Lager mit dem Kraftsensor gekoppelt ist und eine Kraft auf den Sensor überträgt.

Zur Vermeidung der eingangs beschriebenen Nachteile bekannter Förderanordnungen kann eine nicht beanspruchte Förderanordnung umfassen: eine Fördervorrichtung zum Fördern der Produkte, einen Zwischenspeicherbereich, der ausgebildet ist, um Produkte aufzunehmen, die aufgrund diskontinuierlicher Zufuhr oder Abfuhr temporär zwischenzuspeichern sind, eine Steuerungsvorrichtung zum Erhöhen der Abfuhr und/oder zum Verringern der Zufuhr von Produkten in den Zwischenspeicherbereich der Fördervorrichtung, wenn eine vorbestimmte kritische Anzahl von Produkten im Zwischenspeicherbereich überschritten wird, wobei im Zwischenspeicherbereich eine Messvorrichtung angeordnet ist, die ausgebildet und angeordnet ist, um die Anzahl sich aufstellender Produkte im Zwischenspeicherbereich zu erfassen, die ein Maß für die Horizontalkraft zwischen den Produkte im Zwischenspeicherbereich darstellt, und die Steuerungsvorrichtung ausgebildet ist, um die von der Messvorrichtung erfasste Anzahl als Eingangsgröße zu verarbeiten und in deren Abhängigkeit die Abfuhr und/oder Zufuhr der Produkte vom/zum Zwischenspeicherbereich zu erhöhen oder zu verringern.

Diese Variante stellt eine Alternative zur direkten Messung der Kraft im Zwischenspeicherbereich dar und beruht auf der Erkenntnis, dass die im Zwischenspeicherbereich angesammelten Produkte bei Überschreitung einer bestimmten horizontalen Anpresskraft untereinander dazu neigen, sich aufzustellen bzw. übereinanderliegend im Zwischenspeicherbereich angeordnet zu sein. Die Anzahl der solcherart über die auf der Grundfläche des Zwischenspeicherbereichs flach liegenden Produkte herausragenden Produkte, sei es durch Aufstellung oder durch Abstützung auf einem darunterliegenden Produkt, ist ein Maß dafür, wie hoch die Horizontalkräfte zwischen den Produkten im Zwischenspeicherbereich ist und kann daher als Eingangsgröße für die Steuerungsvorrichtung verwendet werden. Diese Förderanordnung eignet sich insbesondere zur Förderung von Eiern, die typischerweise bei erhöhten Förderdruck dazu neigen, sich aufzustellen und dadurch ein zuverlässiges Indiz in Form mehrerer auf ihren Kuppen stehender Eier ergeben, wenn eine vorbestimmte, kritische Horizontalkraft überschritten worden ist.

Die Förderanordnung kann dabei in gleicher Weise wie zuvor dazu genutzt werden, um eine stufenlose Querbandregelung vorzunehmen, die in Abhängigkeit der Anzahl der aufgestellten Produkte im Zwischenspeicherbereich in einem geschlossenen Regelkreis geregelt werden kann.

Die Messvorrichtung kann beispielsweise in Form mehrerer Lichtschranken, die horizontal über die flachliegenden Produkte im Zwischenspeicherbereich hinwegmessen, gebildet werden, wobei vorzugsweise sich kreuzende Lichtwege verwendet werden, um eine flächige Abdeckung und Erfassung sicherzustellen.

Es ist weiterhin bevorzugt, wenn der Zwischenspeicherbereich im Übergabebereich zwischen einer ersten, zuführenden und einer zweiten, abführenden Fördervorrichtung angeordnet ist und die Steuerungsvorrichtung so ausgebildet ist, dass bei Überschreiten einer vorbestimmten Druckkraft zwischen den Produkten bzw. Anzahl der aufgestellten Produkte im Zwischenspeicherbereich die Förderrate der zuführenden Fördervorrichtung verringert und/oder die Förderrate der abführenden Fördervorrichtung erhöht wird.

Die vorbestimmte Druckkraft bzw. Anzahl der aufstehenden Produkte wird dabei beispielsweise in Abhängigkeit der Druckempfindlichkeit der geförderten Produkte gewählt und kann tabellarisch für typische geförderte Produkte in einem Speicher der Steuerungsvorrichtung vorgehalten werden oder über eine Bedieneinheit vom Benutzer der Förderanordnung eingegeben werden.

Es ist weiterhin bevorzugt, wenn die Förderrate der Fördervorrichtung(en) durch eine vorzugsweise stufenlose Änderung der Fördergeschwindigkeit änderbar ist. Durch eine stufenlose Änderung der Fördergeschwindigkeit, beispielsweise mittels Frequenzumformern und elektrischen Antriebsmotoren für Förderbänder oder Stabbandförderer kann eine besonders präzise Regelung der Fördervorrichtungen in einem geschlossenen Regelkreis erzielt werden und hierdurch einerseits Beschädigungen an den Produkten zuverlässig vermieden werden und andererseits eine permanente Bereithaltung der Produkte im Zwischenspeicherbereich sichergestellt werden.

Weiterhin kann die Förderanordnung umfassen: ein Querförderband, welches Produkte zu einer Verarbeitungsstation fördert, und mehrere Längsförderbänder, die so angeordnet sind, dass sie Produkte an verschiedenen, voneinander beabstandeten Orten auf das Querförderband befördern, wobei die Förderanordnung durch eine Vorrichtung zum Erfassen des Förderfortschritts des Querförderbands und eine mit dieser Vorrichtung gekoppelte Regelungsvorrichtung, die ausgebildet ist, um zu Beginn eines Fördervorgangs der Förderanordnung die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang zu setzen, fortgebildet ist.

Solche Förderanordnungen werden beispielsweise benutzt, um aus Produktionseinheiten, die über eine große Fläche verteilt sind, die Produkte einzusammeln und zu einer gemeinsamen Verarbeitungsstation zu fördern. Hierzu sind typischerweise mehrere parallel angeordnete und zueinander versetzte Längsförderbänder vorgesehen, die an voneinander beabstandeten Punkten auf ein gemeinsames Querförderband treffen und welche die Produkte auf das Querförderband fördern. Problematisch an solchen Förderanordnungen ist insbesondere, dass bei diskontinuierlichem Betrieb der Längsförderbänder auch eine diskontinuierliche Zufuhr der Produkte zur Verarbeitungsstation erreicht wird und zudem, bedingt durch die räumliche Anordnung, eine Auslastung der Kapazität der Verarbeitungsstation und der typischerweise auf diese Kapazität abgestimmte Förderkapazität des Querförderbands nicht möglich ist. Diesem Nachteil hilft der vorgenannte Erfindungsaspekt ab, indem der Förderfortschritt des Querförderbands erfasst wird, beispielsweise mittels eines Taktgebers, und eine Regelungsvorrichtung eingesetzt wird, die aus dem Förderfortschritt und der Anordnung der Einmündung der Längsförderbänder auf das Querförderband die diskontinuierliche Aktivierung der Längsförderbänder regelt. Diese Regelung kann einerseits in einer Aktivierung der Längsförderbänder (binäre Regelung) oder in einer Regelung der Fördergeschwindigkeit der Längsförderbänder bestehen. Typischerweise kann auf diese Weise eine zeitversetzte Ansteuerung der Längsförderbänder in einer solchen Art erfolgen, dass die Produkte in einer geschlossenen Front und unter Ausnutzung der Kapazität des Querförderbands gefördert werden und folglich auch die Kapazität der Verarbeitungsstation voll genutzt wird und zudem können bei nachlassender Förderung von Produkten aus einem einzelnen Längsförderband die anderen oder ein anderes Längsförderband in der Förderung hochgefahren, um dies zu kompensieren und die Kompensation ortsaufgelöst in das Querförderband einzuleiten an der Stelle, an der das Defizit aufgetreten ist. Die solcherart vorgeschlagene Regelung der Förderanordnung ermöglicht es erstmals, die Kapazität der Verarbeitungsstation in jedem Betriebszustand voll zu nutzen und hierbei Unterbrechungen des Querförderbands und Schwankungen in der Förderleistung der Längsförderbänder in die regel- und Steuervorgänge einbeziehen zu können.

Insbesondere kann diese Förderanordnung mit Zählvorrichtungen für die Produkte kombiniert werden, die an den Einmündungsstellen der Längsförderbänder auf das Querförderband angeordnet sind und die aus jedem einzelnen Längsförderband zugeförderten Produkte erfassen und zählen. Die Präzision der Regelung kann durch Verwertung der so ermittelten Zähldaten weiter erhöht werden.

Es ist insbesondere bevorzugt, die zuvor beschriebene Förderanordnung fortzubilden, indem die Regelungsvorrichtung ausgebildet ist, um ein am weitesten von der Verarbeitungsstation entferntes erstes Längsförderband zuerst in Gang zu setzen und ein näher zur Verarbeitungsstation angeordnetes zweites Förderband zu einem Zeitpunkt in Gang zu setzen, zu dem das Querförderband soweit fortgeschritten ist, dass die vom ersten Längsförderband zugeförderten Produkte den Einmündungsbereich des zweiten Längsförderbands erreicht haben. Mit dieser Fortbildung wird erreicht, dass nach einem Stillstand der Anlage, insbesondere nach vollständigem Leerfahren der Förderanordnung, das Querförderband in einer solchen Weise aus den mehreren Längsförderbändern beladen wird, dass vermieden wird, dass über einen längeren Querförderbandabschnitt nur vereinzelte Produkte angeordnet sind, sondern stattdessen eine Front von aufgeladenen Produkten voller Kapazität der Verarbeitungsstation auf dem Querförderband ausgebildet wird und hierdurch eine Vollauslastung der Verarbeitungsstation zu einem vorbestimmbaren Zeitpunkt eingeregelt werden kann. Dies ist beispielsweise in der Anwendung der Eiersammlung aus mehreren Stellen sehr vorteilhaft, um die örtlich voneinander beabstandeten Produktionsstellen der Eier in einer solchen Weise einer Packstation zuzuführen, dass die Packstation bei Arbeitsbeginn des Personals voll ausgelastet betrieben werden kann.

Weiterhin ist es bei den zuvor genannten Förderanordnungen vorteilhaft, wenn zumindest zwei Gruppen von Längsförderbändern definiert sind und die Regelungsvorrichtung ausgebildet ist, um die Produkte der Längsförderbänder einer ersten Gruppe auf dem Querförderband vor den Produkten der Längsförderbänder einer zweiten Gruppe anzuordnen. Oftmals ist es gewünscht, Förderanordnungen in einer solchen Weise zu betreiben, dass aus bestimmten Bereichen, insbesondere mehreren voneinander beabstandeten Bereichen, die Produkte gemeinsam eingesammelt werden und erst nach diesem Sammelvorgang die Produkte aus anderen, wiederum mehreren, voneinander beabstandeten Bereichen eingesammelt werden. Auf diese Weise können zwei oder mehr Gruppen von Produktionsbereichen definiert werden, aus denen zeitlich aufeinanderfolgend eingesammelt wird. Die Sicherstellung einer permanenten Kapazitätsauslastung der Verarbeitungsstation ist gerade bei solchen Sammelstrategien mit Förderanordnungen nach dem Stand der Technik nicht erzielbar. Mit der Förderanordnung gemäß der Erfindung wird es nun durch die Regelung der Längsförderbänder in Abhängigkeit ihres Einmündungsorts und in Abhängigkeit des Querbandfortschritts erstmals möglich, auch eine solche gruppenweise Einsammlung durchzuführen und hierbei eine permanente Kapazitätsauslastung der Verarbeitungsstation zu erzielen. Dabei wird nach dem Prinzip vorgegangen, ebenso wie bei der gemeinsamen Einsammlung und Verarbeitung aller Produktionsbereiche, die Produktionsbereiche einer Gruppe solcherart über die entsprechenden Längsförderbänder dem Querförderband zuzuführen, dass eine geschlossenen Front in voller Verarbeitungsstationskapazität ausgebildet wird und nach vollständiger Einsammlung der Gruppe eine nächste geschlossene Front der nächsten Gruppe unmittelbar hinter dem Ende der vorherigen Gruppe ausgebildet wird u.s.w.

Dabei ist es insbesondere bevorzugt, wenn die Regelungsvorrichtung ausgebildet ist, um in jeder Gruppe zuerst das am weitesten von der Verarbeitungsstation entfernte Längsförderband zu betätigen. Auf diese Weise wird wiederum erreicht, dass die Gruppen in sich geschlossene Kapazitätsauslastungen der Verarbeitungsstation erzielen und ein längeres Nachlaufen des Querförderbands bei niedriger Kapazitätsauslastung vermieden wird.

Weiterhin ist es bevorzugt, wenn die Regelungsvorrichtung ausgebildet ist, um die Längsförderbänder der Gruppe mit dem am weitesten von der Verarbeitungsstation entfernten Längsförderband als letzte Gruppe zu betätigen. Dies hat sich als vorteilhaft herausgestellt, da ansonsten eine die Auslastung der Verarbeitungsstation störende, größere Lücke auf dem Querförderband auftreten würde, wenn beispielsweise eines der vorderen Längsförderbänder in einer vorderen Gruppe eingesammelt wird und hierauf folgend das letzte Längsförderband betätigt wird, wodurch das Querförderband über eine Länge produktfrei bleibt, die dem Abstand zwischen dem vorderen und dem letzten Längsförderband entspricht. Alternativ hierzu könnte das am weitesten von der Verarbeitungsstation entfernte Längsförderband in der letzte Gruppe aktiviert werden und diese Aktivierung einen vorbestimmten Zeitraum vor Beendigung der Aktivierung des letzten Längsförderbands der vorherigen Gruppe erfolgen. In diesem Fall wird das Förderende der vorherigen Gruppe vorausberechnet und das weitest entfernt liegende Längsförderband so gestartet, dass eine Lücke zwischen den beiden Gruppen vermieden wird.

Die gruppenweise Einsammlung kann weiter optimiert werden, indem die Regelungsvorrichtung ausgebildet ist, um den Zeitpunkt des Stops des letzten Längsförderbands einer Gruppe und der Aktivierung des ersten Längsförderbands einer darauffolgenden Gruppe in Abhängigkeit des Abstands zwischen der Einmündung des letzten Längsförderbands und des ersten Längsförderbands auf das Querförderband und dem Querförderbandfortschritt zu bestimmen. Mit dieser Fortbildung wird es möglich, dass die Regelungsvorrichtung zwischen zwei Gruppen einen definierten - positiven oder negativen - Abstand lässt, indem Stop und Start der entsprechenden Längsförderbänder so gesteuert wird, dass sich die Gruppen gezielt überschneiden oder nicht überschneiden oder einen bestimmten Abstand voneinander aufweisen.

Dabei ist es besonders bevorzugt, wenn die Regelungsvorrichtung ausgebildet ist, um die Längsförderbänder und das Querförderband zu stoppen, wenn das letzte Produkt einer Gruppe in die Verarbeitungsvorrichtung gefördert worden ist. Auf diese Weise wird durch die Regelungsvorrichtung die Möglichkeit geschaffen, an der Verarbeitungsstation eine Umrüstung vorzunehmen, um Produkte unterschiedlicher Gruppen in unterschiedlicher Weise zu verarbeiten. Dabei kann das letzte Produkt einer Gruppe oder das erste Produkt einer folgenden Gruppe als Kriterium herangezogen werden, um den Stop des Querförderbands zu veranlassen.

Es ist weiterhin bevorzugt, wenn die Regelungsvorrichtung ausgebildet ist, um die Zeitpunkte so zu bestimmen, dass die letzten Produkte des letzten Längsförderbandes der ersten Gruppe und die ersten Produkten des ersten Längsförderbands der zweiten Gruppe in einem gemeinsamen Mischbereich auf dem Querförderband abgelegt werden. Auf diese Weise wird ein Mischbereich erzeugt, der beispielsweise Produkte unterschiedlicher Qualitätsstufen enthalten und bei dessen Verarbeitung somit beispielsweise in Kauf genommen werden muss, dass Produkte einer höheren Qualitätsstufe in eine Verpackung einsortiert werden, die mit einer niedrigeren Qualitätsstufe klassifiziert ist. Jedoch kann mit dieser Fortbildung der Vorteil erreicht werden, dass die Kapazität der Verarbeitungsstation ohne Unterbrechung voll ausgelastet wird und ein fließender Wechsel zwischen den Produkten der ersten und der zweiten Gruppe stattfindet. In diesem Fall wird der Mischbereich in der Verarbeitungsstation so behandelt wie die Gruppe mit den Produkten der niederen Qualität und dementsprechend vor oder nach Beginn des Mischbereichs die Umstellung der Verarbeitungsweise an der Verarbeitungsstation vorgenommen, je nachdem ob die Produkte sich hinsichtlich der Qualität von Gruppe zu Gruppe verschlechtern oder verbessern. Schließlich ist es noch bevorzugt, wenn bei der gruppenweisen Einsammlung die Regelungsvorrichtung ausgebildet ist, um die Zeitpunkte des Startens und Stoppens der Längsförderbänder der aufeinanderfolgenden Gruppen so zu bestimmen, dass zwischen den Produkten der ersten Gruppe und der zweiten Gruppe ein Zwischenraum auf dem Querförderband ausgebildet wird. Auf diese Weise kann ohne Unterbrechung des Fördervorgangs ein Zeitraum für die Umrüstung der Verarbeitungsstation geschaffen werden.

Die erfindungsgemäße Förderanordnung kann insbesondere so ausgebildet sein, dass die Regelungsvorrichtung ausgebildet ist, um so viele Längsförderbänder zu aktivieren und/oder die Fördergeschwindigkeit der aktivierten Längsförderbänder so zu regeln, dass jedem Bereich des Querförderbandes so viele Produkte zugeführt werden, dass eine vorbestimmte Kapazität der Verarbeitungsstation erreicht wird. Auf diese Weise wird durch Aktivierung und/oder Geschwindigkeitsregelung der Längsförderbänder zu jedem Zeitpunkt eine volle Kapazitätsauslastung der Verarbeitungsstation erzielt.

Weiterhin ist es bevorzugt, wenn die Regelungsvorrichtung ausgebildet ist, um Jedem aktivierten Längsförderband einen Bruchteil der Querförderbandbreite zuzuweisen und die Fördergeschwindigkeit jedes Längsförderbandes so zu regeln, dass die jeweils zugewiesene Breite des Querförderbandes durch das jeweilige Längsförderband mit Produkten aufgefüllt wird. Durch diese Zuweisung kann jedes einzelne Längsförderband in der Förderleistung so eingeregelt werden, dass der ihm zugewiesene Bruchteil der Querförderbandbreite voll ausgelastet wird. Dies erlaubt es, Längsförderbänder, die in besonders schneller Weise geleert werden sollen, mit einem großen Bruchteil der Querförderbandbreite zu versehen und somit bevorzugt einzusammeln und Längsförderbänder, die über einen längeren Zeitraum eingesammelt werden sollen, mit einem nur kleinen Bruchteil der Querförderbandbreite zu versehen, um eine entsprechend langsame Einsammlung zu bewirken.

Insbesondere ist es dabei bevorzugt, wenn jedes Längsförderband eine bestimmte Anzahl von Produkten vorspeichert und die Regelungsvorrichtung mit Sensoren zur Erfassung der auf jedem Längsförderband noch gespeicherten Produkten gekoppelt und ausgebildet ist, um einem Längsförderband mit wenigen Produkten einen geringeren Bruchteil der Querförderbandbreite zuzuweisen als einem Längsförderband mit mehr Produkten, um eine zeitgleiche oder um einen bestimmten Betrag zeitversetzte Beendigung der Leerung aller Längsförderbänder zu erreichen. Diese Fortbildung der Erfindung erreicht, dass neben der mit der erfindungsgemäßen Förderanordnung möglichen vollen Kapazitätsauslastung der Verarbeitungsstation von Anbeginn des Fördervorgangs auch eine Vollauslastung der Verarbeitungsstation bis zum Ende des Fördervorgangs erreicht wird. Die Sensoren zur Erfassung der auf jedem Längsförderband noch gespeicherten Produkte können dabei i einer einfachen Fassung aus Wehsensoren bestehen, die den Förderbandfortschritt des Längsförderbands erfassen. Eine verbesserte Erfassung wird durch zusätzliche Ermittlung der Produktdichte auf dem Längsförderband, beispielsweise durch Produktzählung am Ausgang, erreicht. Insbesondere kann, wenn Gewichtskraftsensoren der zuvor beschriebenen Weise installiert sind, aus den gemessenen Gewichten auf die insgesamt auf dem Längsförderband liegenden Eier geschlossen werden.

Ein typisches Problem bei Förderanordnungen des Standes der Technik besteht darin, dass die Längsförderbänder unterschiedliche Mengen von Produkten bereithalten und hierdurch Längsförderbänder, die mehr Produkte als andere bereitgehalten haben, nach Beendigung des Fördervorgangs aller anderen Längsförderbänder noch nachlaufen müssen und hierdurch eine nur geringe Menge von Produkten auf das Querförderband aus dem einzelnen nachfördernden Längsförderband zugefördert wird und aus dieser Menge die Verarbeitungsstation über einen längeren Zeitraum nicht in ihrer vollen Kapazität ausgelastet werden kann. Dies verursacht zeitintensives Nacharbeiten an der Verarbeitungsstation. Mit der erfindungsgemäßen Fortbildung wird es möglich, solchen Längsförderbändern einen großen Bruchteil der Querförderbandbreite zuzuweisen und hierdurch die Längsförderbänder mit einer größeren Anzahl von Produkten ebenso schnell zu leeren wie die anderen Längsförderbänder. Die erfindungsgemäße Regelungsvorrichtung ermöglicht hierbei eine dynamische Regelung der jeweils zugewiesenen Querförderbandbreiten, d.h. sobald einem voll gefüllten Längsförderband eine größere Querförderbandbreite zugewiesen wird, wird dynamisch die Querförderbandbreite der anderen Längsförderbänder soweit reduziert, dass in der Summe der dem einen Längsförderband zugeschlagene Anteil gewonnen wird. Das Ziel der solcherart modifizierten Regelung ist, die Verarbeitungsstation bis zum Ende der Verarbeitung mit voller Kapazität zu betreiben und ein Nachlaufen der Verarbeitungsstation für vereinzelte nachgeförderte Produkte bei niedriger Kapazitätsauslastung zu vermeiden. Zu diesem Zweck wird es typischerweise erforderlich sein, die Längsförderbänder zeitversetzt zu stoppen, da die nächstliegend zur Verarbeitungsstation liegenden Längsförderbänder zuletzt angehalten werden müssen und das am weitesten entfernte Längsförderband als erstes gestoppt werden muss, um die gewünschte abrupte Beendigung der Produktansammlung auf dem Querförderband zu erzielen.

Es ist insbesondere bevorzugt, wenn die Regelungsvorrichtung mit einem am Auslaufbereich des Querkraftförderbandes angeordneten Kraftsensor oder einem Zähisensor der zuvor beschriebenen Art gekoppelt und ausgebildet ist, um die Fördergeschwindigkeit des Querförderbandes in Abhängigkeit des Sensorsignals zu regeln.

Die Implementation eines solchen Kraftsensors ermöglicht insbesondere im Zusammenhang mit der erfindungsgemäßen Förderanordnung mit Regelungsvorrichtung eine zuverlässige und komfortable Regelung, da die anhand des Kraftsensors bewirkte Variation der Fördergeschwindigkeit des Querförderbands in die Regelung in Form des Querförderbandfortschritts einfließt und somit berücksichtigt werden kann. Mit anderen Worten, es wird erstmals mit der erfindungsgemäßen Förderanordnung möglich, eine Vollauslastung der Verarbeitungsstation zu jedem Zeitpunkt des Fördervorgangs zu erreichen und hierbei oftmalige Starts und Stops des Querförderbands zu vermeiden, indem eine stufenlose Regelung des Querförderbands erfolgt und zugleich eine jederzeit und an jedem Ort des Querförderbands vollständige Auffüllung der Breite des Querförderbands mit Produkten aus den Längsförderbändern erzielt wird.

Schließlich kann die erfindungsgemäße Förderanordnung weiter fortgebildet werden durch eine Anzeigevorrichtung, welche mit der Regelungsvorrichtung gekoppelt ist um von der Regelungsvorrichtung Signale zur ortsaufgelösten Darstellung der Anzahl der Produkte auf dem Querförderband zu erhalten. Die solcherart bereitgestellte Anzeigenvorrichtung ermöglicht es einem Benutzer der Förderanordnung, die Auslastung der einzelnen Förderbandstränge und der Verarbeitungsstation auf einen Blick zu erkennen und - falls erforderlich - die Regelungsvorgänge durch Parameterwahl zu verändern und zu optimieren.

Die Förderanordnung kann umfassen: ein Querförderband und mehrere auf das Querförderband einmündende Längsförderbänder, mit zumindest einer beweglichen Produktleitvorrichtung, welche oberhalb des Querförderbands angeordnet ist und mit einem Aktuator gekoppelt ist, wobei der Aktuator die Produktleitvorrichtung in zumindest zwei Stellungen in den Auflagebereich des Querförderbandes bewegen kann und die Produktleitvorrichtung in solcher Weise seitlich am Querförderband platziert ist, dass sie die Produkte auf dem Querförderband vom Einmündungsbereich zumindest eines Längsförderbandes wegleitet. Mit dieser Förderanordnung ist es möglich, Beschädigungen aufgrund Kollision bereits auf dem Querförderband befindlicher Produkte mit aus dem Längsförderband hinzutretenden Produkten zu vermeiden. Der Aktuator kann elektrisch, pneumatisch, hydraulisch oder in anderer Weise betätigt sein. Die Produktleitvorrichtung kann eine schwenkbar gelagerte Platte sein.

Dabei ist es besonders bevorzugt, wenn mehrere bewegliche Produktleitvorrichtungen, welche jeweils in Förderrichtung des Querförderbandes vor den Einmündungsbereichen mehrerer Längsförderbänder angeordnet sind, vorgesehen sind. Mit dieser Fortbildung wird eine variable Produktleitung in Abhängigkeit des Förderzustands und der aktivierten Längsförderbänder möglich.

Weiterhin ist es bevorzugt, wenn der Aktuator jeder Produktleitvorrichtung mit einer Steuerungsvorrichtung gekoppelt ist und in Abhängigkeit des von der Steuerungsvorrichtung aus zugeförderten Produkten und Querbandfortschritt berechneten Füllgrads des Querförderbands vor der jeweiligen Produktleitvorrichtung betätigt wird, um die Produkte um soweit vom Einmündungsbereich der Längsförderbänder wegzuleiten, wie es der Füllgrad zulässt. So kann vermieden werden, das Produkte vom Querförderband seitlich weggeschoben oder beschädigt werden. Die Produktleitvorrichtung kann so eingestellt werden, dass die maximal mögliche Ablenkung erzielt wird oder nur ein Bruchteil davonb, beispielsweise eine Ablenkung die gerade ausreichend ist, um den Platz auf dem Querförderband für die noch hinzutretenden Produkte zu schaffen.

Weiterhin ist es bei gruppenweiser Einsammlung bevorzugt, wenn der Aktuator jeder Produktleitvorrichtung in Abhängigkeit der gesammelten Gruppe betätigt wird. So kann eine vorprogrammierte Aktuatorbetätigung erfolgen und gruppenabhängig eingestellt werden, wenn die jeweilige Gruppe eingesammelt wird.

Die zuvor beschriebene, erfindungsgemäße Förderanordnung wird vorzugsweise zum Fördern von Eiern auf einem Längsförderband, auf dem eine Mehrzahl voneinander beabstandeter, ortsfester Zwischenspeicherbereiche ausgebildet ist, die so angeordnet sind, dass sie die in Nestbereichen in einer Reihe entlang des Längsbands angeordneten Käfigen gelegten Eier aufnehmen, verwendet.

Die zuvor beschriebene erfindungsgemäße Förderanordnung kann weiterhin zum Fördern von Eiern auf einem Querförderband, dass ausgebildet ist, um Eier in einen Zwischenspeicherbereich zu fördern, der in Förderrichtung vor einer Weiterverarbeitungsanlage, insbesondere einer Verpackungsanlage angeordnet ist, verwendet werden.

Die erfindungsgemäße Förderanordnung wird vorzugsweise mit einem Verfahren zum Fördern von Eiern im Bereich eines mehrere Käfigeinheiten umfassenden Stalles betrieben, mit den Schritten:
a. Zwischenspeichern der in einem ersten Nestbereich eines Käfigs oder einem ersten Käfig gelegten Eier auf einem ersten Zwischenspeicherbereich eines stillstehenden Förderbands,
b. Messen der summierten Gewichtskraft der im ersten Zwischenspeicherbereich befindlichen Eier,
c. Weiterfördern des Längsförderbands um eine vorbestimmte Distanz, die so bemessen ist, dass ein nicht mit Eiern belegter Förderbandabschnitt als erster Zwischenspeicherbereich bereitgestellt wird,
d. Wiederholen der Schritte a bis c bis zu einem Zeitpunkt, zu dem ein Weiterfördern des Längsförderbands um die vorbestimmte Distanz einen durch einen benachbarten, zweiten Zwischenspeicherbereich eines Nestbereichs eines benachbarten zweiten Käfigs oder eines zweiten Käfigs bereits mit Eiern belegten Förderbandabschnitt als ersten Zwischenspeicherbereich bereitstellen würde, und
e. Weiterfördern des Förderbands bis die darauf abgelegten Eier vollständig auf ein zweites Förderband oder in einen Speicher übergeleitet worden sind.

Weiterhin ist es bevorzugt, wenn die zuvor beschriebene Förderanordnung mit einem Verfahren zum Fördern von Eiern betrieben wird, mit den Schritten:
a. Fördern der Eier auf einer ersten Fördervorrichtung in einen Zwischenspeicherbereich
b1. Messen der auf einen seitlichen Begrenzungswandabschnitt des Zwischenspeicherbereichs durch die Eier ausgeübten summierten Druckkraft, oder
b2 Messen der im Zwischenspeicherbereich befindlichen aufgestellten Eier,
c. Weiterfördern der Eier aus dem Zwischenspeicherbereich mittels einer zweiten Fördervorrichtung,
d. Regeln der Fördergeschwindigkeit der ersten oder zweiten Fördervorrichtung in Abhängigkeit der gemessenen Druckkraft bzw. der gemessenen Anzahl der aufgestellten Eier.

Gemäß eines weiteren Aspekts kann die erfindungsgemäße Förderanordnung mit einem Verfahren betrieben werden, mit den Schritten: Fördern von Produkte auf einem Querförderband zu einer Verarbeitungsstation, und Zufördern von Produkten mittels mehrerer Längsförderbänder, zu verschiedenen, voneinander beabstandeten Orten auf das Querförderband, wobei der Förderfortschritt des Querförderbands erfasst wird und zu Beginn des Fördervorgangs die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang gesetzt werden.

Es ist bevorzugt, wenn das am weitesten von der Verarbeitungsstation entfernte erste Längsförderband zuerst in Gang gesetzt wird und ein näher zur Verarbeitungsstation angeordnetes zweites Förderband zu einem Zeitpunkt in Gang gesetzt wird, zu dem das Querförderband soweit fortgeschritten ist, dass die vom ersten Längsförderband zugeförderten Produkte den Einmündungsbereich des zweiten Längsförderbands erreicht haben.

Es ist bevorzugt, wenn vor Beginn des Fördervorgangs zumindest zwei Gruppen von Längsförderbändern definiert werden und zuerst die Längsförderbänder einer ersten Gruppe aktiviert werden und hierauf folgend die Längsförderbänder einer zweiten Gruppe aktiviert werden.

Es ist bevorzugt, wenn in jeder Gruppe zuerst das am weitesten von der Verarbeitungsstation entfernte Längsförderband aktiviert wird.

Es ist bevorzugt, wenn die Längsförderbänder der Gruppe mit dem am weitesten von der Verarbeitungsstation entfernten Längsförderband als letzte Gruppe aktiviert werden.

Es ist bevorzugt, wenn der Zeitpunkt des Stops des letzten Längsförderbands einer Gruppe und der Aktivierung des ersten Längsförderbands einer darauffolgenden Gruppe in Abhängigkeit des Abstands zwischen der Einmündung des letzten Längsförderbands und des ersten Längsförderbands auf das Querförderband und dem Querförderbandfortschritt bestimmt wird.

Es ist bevorzugt, wenn die Längsförderbänder und das Querförderband gestoppt werden, wenn das letzte Produkt einer Gruppe in die Verarbeitungsvorrichtung gefördert worden ist.

Es ist bevorzugt, wenn die letzten Produkte des letzten Längsförderbandes der ersten Gruppe und die ersten Produkten des ersten Längsförderbands der zweiten Gruppe in einem gemeinsamen Mischbereich auf dem Querförderband abgelegt werden.

Es ist bevorzugt, wenn zwischen den Produkten der ersten Gruppe von Längsförderbändern und den Produkten der zweiten Gruppe von Längsförderbändern ein Zwischenraum auf dem Querförderband ausgebildet wird.

Es ist bevorzugt, wenn so viele Längsförderbänder aktiviert werden und/oder die Fördergeschwindigkeit der aktivierten Längsförderbänder so geregelt wird, dass jedem Bereich des Querförderbandes so viele Produkte zugeführt werden, dass eine vorbestimmte Kapazität der Verarbeitungsstation erreicht wird.

Es ist bevorzugt, wenn jedem aktivierten Längsförderband einen Bruchteil der Querförderbandbrelte zugewiesen wird und die Fördergeschwindigkeit jedes Längsförderbandes so geregelt wird, dass die jeweils zugewiesene Breite des Querförderbandes durch das jeweilige Längsförderband mit Produkten aufgefüllt wird.

Es ist bevorzugt, wenn jedes Längsförderband eine bestimmte Anzahl von Produkten vorspeichert und mittels Sensoren die auf jedem Längsförderband noch gespeicherten Produkten erfasst werden und einem Längsförderband mit wenigen Produkten ein geringerer Bruchteil der Querförderbandbreite zugewiesen wird als einem Längsförderband mit mehr Produkten, um eine zeitgleiche oder um einen bestimmten Betrag zeitversetzte Beendigung der Leerung aller Längsförderbänder zu erreichen.

Es ist bevorzugt, wenn ein am Auslaufbereich des Querförderbandes angeordneter Kraftsensor die horizontal zwischen den Produkten im Auslaufbereich herrschende Druckkraft misst und die Fördergeschwindigkeit des Querförderbandes in Abhängigkeit des Kraftsensorsignals geregelt wird.

Es ist bevorzugt, wenn die Fördergeschwindigkeit des Querförderbandes verringert wird, wenn die gemessene Druckkraft einen vorbestimmten Wert übersteigt.

Es ist bevorzugt, wenn die Fördergeschwindigkeit des Querförderbandes erhöht wird, wenn die gemessene Druckkraft einen vorbestimmten Wert unterschreitet.

Es ist bevorzugt, wenn die Fördergeschwindigkeit der Längsförderbänder und/oder des Querförderbandes stufenlos verändert wird.

Es ist bevorzugt, wenn ein Verarbeitungsstartzeitpunkt eingegeben wird und die Aktivierung und Fördergeschwindigkeit der Längsförderbänder und des Querförderbandes zu einem in Abhängigkeit des Abstands zwischen Längsförderbandeinmündung auf das Querförderband und Querförderbandfortschritt ermittelten Zeitpunkt gestartet werden, um zum Startzeitpunkt der Verarbeitungsstation Produkte in einer vorbestimmten Kapazität der Verarbeitungsstation zuzuführen.

Die Erfindung kann weiterhin implementiert sein in einem Computerprogrammprodukt zum Ablauf auf einen Computer, welches so programmiert ist, dass es die für die Regelung der erfindungsgemäßen Förderanordnung erforderlichen Schritte durchführt, wenn es auf einem Computer abläuft.

Eine bevorzugte Ausführungsform der Erfindung wird anhand der Figuren beschrieben. Es zeigen:

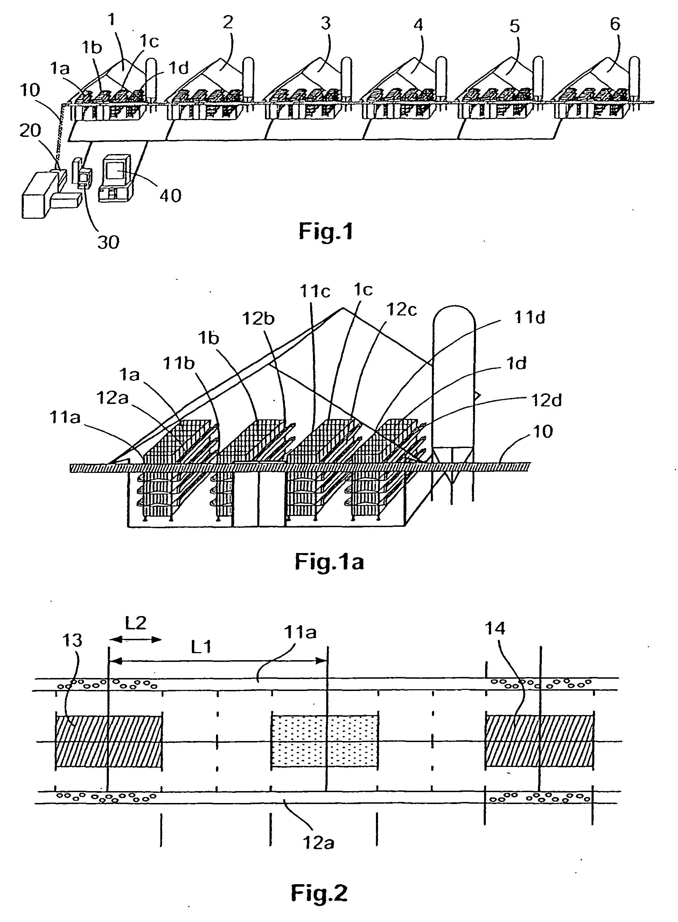

- Fig. 1:: Eine schematische Darstellung einer Förderanordnung mit sechs Stallgebäuden und Längsförderbändern und einem Querförderband,
- Fig. 1 a: Eine vergrößerte Ansicht eines einzelnen Stallgebäudes aus Fig. 1
- Fig. 2:: Eine schematische Draufsicht auf den Bereich einer Stallreihe mit nebeneinander angeordneten Volieren,
- Fig. 3:: Eine quergeschnittene Seitenansicht des Bereichs des Längsförderbands und Ausrollbereichs aus einem Nest einer Voliere,
- Fig. 4a:: Eine erste Ausführungsform des Einlaufsbereichs eines Querförderbandes in einen Packer mit Kraftaufnahmevorrichtung,
- Fig. 4b:: Eine zweite Ausführungsform gem. Fig. 4a,
- Fig. 4c:: Eine dritte Ausführungsform gem. Fig. 4a,
- Fig. 5:: Eine Seitenansicht einer Variante der Ausführungsformen gem. Fig. 4b und 4c,
- Fig. 6:: Eine Draufsicht auf eine vierte Ausführungsform gem. Fig. 4a mit Querbandförderbandregelung,
- Fig. 7:: Eine schematische Darstellung einer Visualisierung des Förderfortschritts eines Querförderbands in einer Startphase des Fördervorgangs,
- Fig. 8:: Einen Ausschnitt aus Fig. 7 zu einem Zeitpunkt der Beendigung des Fördervorgangs,
- Fig. 9:: Eine schematische Darstellung einer weiteren Ausführungsform der erfindungsgemäßen Förderanordnung mit zwei Querförderbändern,
- Fig. 10:: Eine schematische Darstellung der Visualisierung des Förderbandfortschritts der Anordnung gem. Fig. 9, und
- Fig. 11:: Eine schematische Draufsicht auf einen Ausschnitt eines Querförderband mit fünf einmündenden Längsförderbändern und vier steuerbaren Produktleiteinrichtungen.

Fig. 1 zeigt eine Eierfarm mit sechs Stallgebäuden 1-6, in denen jeweils vier Doppelreihen 1 a-d mit mehreren Etagen hintereinander angereihter Volieren angeordnet ist.

Die Stallgebäude 1-6 sind so nebeneinander angeordnet, dass ein Querförderband 10 an der Stirnseite der Stallgebäude geradlinig durchlaufen kann. Das Querförderband 10 ist im Bereich der Stallgebäude rechtwinklig zu den Volierenreihen 1a-d ausgerichtet.

Wie insbesondere in Fig. 1a gut zu erkennen, sind an jeder Seite der Volierenreihen 1a-d jeweils parallel zueinander angeordnete Längsförderbänder 11a-d und 12a-d angeordnet. Jede Etage der Volierenreihen hat eigene Längsförderbänder, so dass sich für die fünf Etagen der Volierenreihen gem. Fig. 1, 1a insgesamt 10 Längsförderbänder pro Volierenreihe und 40 Längsförderbänder pro Stallgebäude ergeben. Die Längsförderbänder der einzelnen Volierenreihen münden alternativ in einen Elevator an der Stirnseite jeder Volierenreihe, der die Eier aus den 10 Längsförderbändern einer Volierenreihe auf das Querförderband hebt oder das Querförderband 10 wird in der Höhe verfahren und die fünf Etagen der Volierenreihen werden zeitlich aufeinanderfolgend gesammelt.

Das Querförderband 10 fördert in den Figuren 1, 1a von rechts nach links und mündet in eine Packstation 20, in der die Eier verpackt werden.

Eine zentrale Steuer- und Regeleinheit 30 ist mit peripheren Steuer- und Regeleinheiten in jedem Stallgebäude verbunden und führt die erfindungsgemäßen Steuer- und Regelvorgänge der Längsförderbänder und des Querförderbands 10 aus.

Eine zentrale Farmsteuerung 40 ermöglicht eine Anwahl von Parametern, eine Visualisierung des Eiersammelvorgangs und der Auslastung der einzelnen Förderbänder.

Fig. 2 zeigt eine Draufsicht auf einen Ausschnitt einer Doppelvolierenreihe mit vier Volieren und links und rechts anschließenden, teilweise dargestellten weiteren je zwei Volieren. Eine einzelne Voliere erstreckt sich über eine Länge L1 der Längsförderbänder 11a,12a. Ein Bruchteil L2 der Länge L1 wird durch einen Nestbereich in der Voliere eingenommen. Im Bereich der Länge L2 werden über 90% der Eier von den Hennen der Voliere gelegt, so dass das Förderband im Bereich L2 bei Stillstand in kurzer Zeit während der Legezeit aufgefüllt wird.

Zwei Nestbereiche benachbarter Volieren grenzen unmittelbar aneinander, wie in Fig. 2 erkennbar. Die Längsförderbänder 11a,12a müssen daher, wenn das Längsförderband im Bereich des Nestes mit Eiern aufgefüllt ist, zumindest um die zweimalige Länge L2 vorgezogen werden, um einen leerstehenden Förderbandanteil in den Nestbereich zu bringen. Da L2 im vorliegenden Beispiel ein Viertel von L1 beträgt, kann dieser Vorzugvorgang des Längsförderbands 11a,12a dreimalig erfolgen. Beim vierten Mal würde der aufgefüllte Bereich des Längsförderbands 11a,12a aus dem Nestbereich 13 in den Nestbereich 14 gefördert. Da in diesem Fall das Längsförderband somit voll ist, muss nach dreimaligem Vorziehen um die Länge 2 x L2 das Längsförderband dauerhaft betrieben werden, bis alle Eier vom Längsförderband 11a,12a auf das Querförderband 10 gefördert sind.

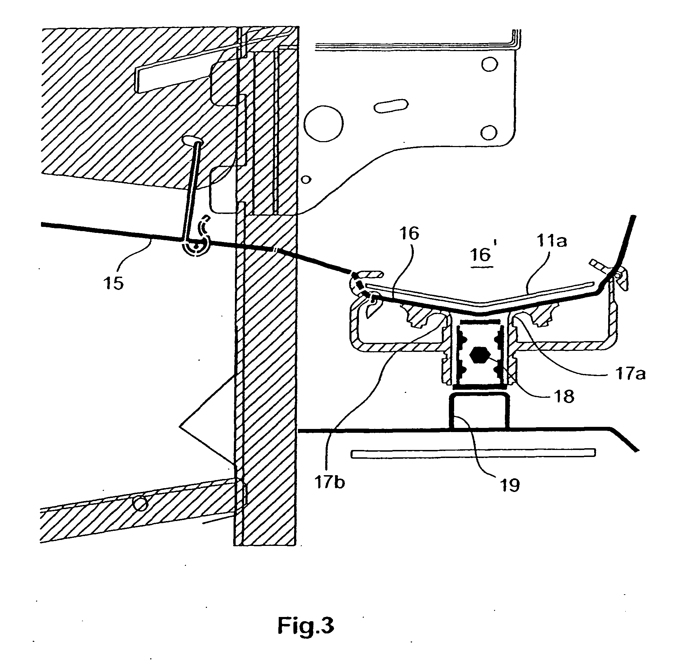

Fig. 3 zeigt eine Anordnung des erfindungsgemäßen Kraftsensors, welche ausgebildet ist, den Vorschub der Längsförderbänder in Abhängigkeit der im Nestbereich auf das Längsförderband gerollten Eier zu steuern. Die Eier rollen auf einer schiefen Ebene 15 aus dem Nestbereich zum Längsförderband 11a. Der Obertrumm des Längsförderbands 11a verläuft oberhalb einer Wiegeschale 16, die mittels zwei L-förmiger Profile 17a,b mit einem Kraftsensor gekoppelt ist. Der Kraftsensor 18 ist mittels eines U-Profils 19 fest mit dem Rahmen der Volieren verbunden. Der Kraftsensor 18 ermittelt das Gewicht der im Zwischenspeicherbereich 16' auf dem Förderband 11a oberhalb der Wiegeschale 16 angeordneten Eier.

Der Kraftsensor 18 kann als Drucksensor ausgeführt sein, vorzugsweise wird er jedoch als einseitig wirkender Biegebalkensensor ausgeführt, was eine robuste und zugleich zuverlässige Ausführungsform darstellt.

Der Ablauf des Förderverfahrens der Anordnung gem. Fig. 3 ist wie folgt. Die Eier rollen auf der schiefen Ebene 15 zu einem Stopdraht außerhalb des Volierenrahmens (nicht dargestellt). Der Stopdraht bremst die Eier ab und verhindert somit Kollision dieser Eier mit bereits auf dem Förderband liegenden Eier und wird zyklisch angehoben, um die Eier mit geringer Geschwindigkeit auf das Förderband durchzulassen. Je mehr Eier auf dem Förderband im Bereich oberhalb der Wiegeschale 16 liegen, desto mehr Gewicht wird durch den Kraftsensor 18 detektiert. Bei Erreichen eines bestimmten Grenzwerts, der unter Zugrundelegung eines durchschnittlichen Eigewichts eine vollständige Befüllung des Längsförderbands im Bereich des Nestes ergibt, wird das Längsförderband um den doppelten Betrag der Nestlänge vorgezogen, um hierdurch einen leeren Längsförderbandbereich in den Nestbereich zu bringen. Dies wird dreimalig wiederholt und beim vierten Mal eine vollständige Absammlung der Eier vom Längsförderband durchgeführt, indem das Längsförderband so lange betrieben wird, bis es um zumindest eine gesamte Förderbandlängenestreckung (also um die Hälfte der Länge des Förderbands) durchgelaufen ist und alle Eier auf das Querförderband 10 gefördert worden sind.

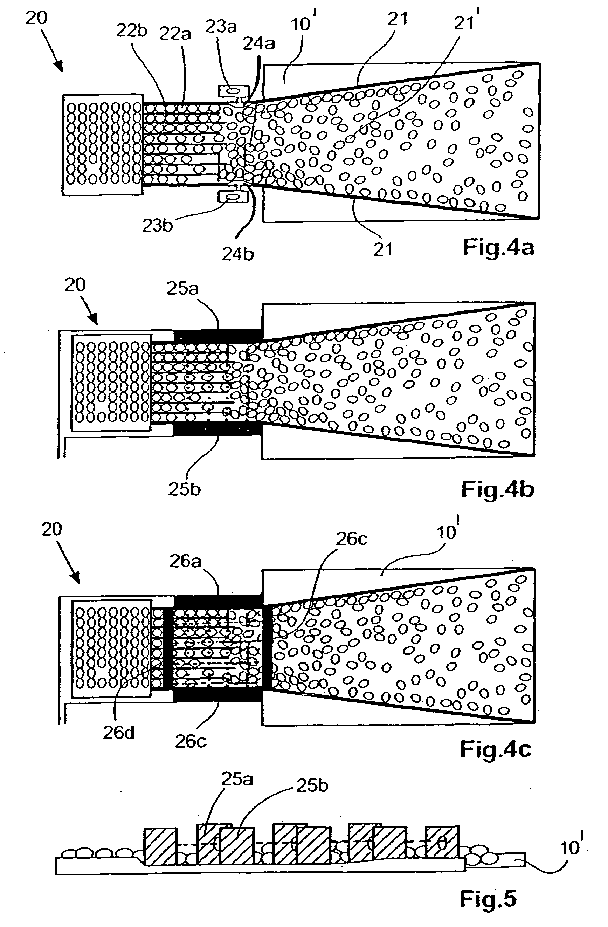

Fig. 4a zeigt eine andere Ausführungsform eines Kraftsensors im Einlaufbereich einer Packstation. Die Eier werden von einem oder mehreren Querförderbändem über einen Trichtertisch 10' an die Packstation herangeführt und auf dem Trichtertisch mittels Wandleitelementen 21 auf die Breite der Packstation 20 zusammengeführt. Hierdurch erfolgt eine Verdichtung der Eierverteilung in einem Zwischenspeicherbereich 21' zwischen den beiden Wandleitelementen 21. Im Einlaufbereich der Packstation müssen die Eier in Leitkanäle 22a,b,... eingeführt werden. In diesen Bereichen kann es zu Stauungen aufgrund querstehender Eier kommen, was zu einer weiteren Verdichtung der Eierverteilung führen kann. Durch diese Verdichtung kann der horizontale Druck zwischen den Eiern im Einlaufbereich vor der Packstation so hoch werden, dass Haarrisse in den Eierschalen entstehen oder Eier vollständig zerstört werden.

Um eine solche Situation bereits vor Auftreten von Beschädigungen zu erfassen sind seitlich im Einlaufbereich zwei Drucksensoren 23a,b angeordnet, die mit zwei halbrunden Druckaufnahmeplatten 24a,b gekoppelt sind. Die Druckaufnahmeplatten 24,b ragen in den Eierstrom hinein und nehmen eine überlagerte, horizontal wirkende Kraftkomponente quer zur Förderrichtung und entgegen der Förderrichtung auf. In Abhängigkeit der Höhe der von den Kraftsensoren 23a,b detektierten Kraft wird die Fördergeschwindigkeit des Querförderbands 10 geregelt. Steigt die gemessene Kraft an, so wird die Querförderbandgeschwindigkeit reduziert, fällt die Kraft ab, so wird die Querförderbandgeschwindigkeit erhöht.

Fig. 4b zeigt eine Alternative zur Anordnung gem. Fig. 4a. In der Anordnung gem. Fig. 4b wird auf die Kraftsensoren 23a,b verzichtet und stattdessen Lichtschranken 25a,b verwendet, die quer über den Einlaufbereich der Packstation 20 führen. Die Lichtschranken sind so ausgerichtet, dass sie über die auf der Bodenfläche der Packstation flachliegenden Eier hinübermessen, wie in Fig. 5 zu erkennen. Sobald sich ein Ei aufstellt oder Eier übereinander zu liegen kommen, durchbrechen diese die Lichtschranke 25a,b. Die Anzahl solcherart detektierter Eier ist ein Maß für den horizontalen Druck zwischen den Eiern im Einlaufbereich und kann wiederum, wie zuvor beschrieben, zur Regelung der Querbandfördergeschwindigkeit dienen.

Fig. 4c zeigt eine weitere Variante der Ausführungsform mit Lichtschranken gem. Fig. 4b. In Fig. 4c sind insgesamt vier Lichtschrankenelemente 26a-d angeordnet, welche den Einlaufbereich der Packstation 20 flächig überwachen und somit eine präzisere Erfassung aufgestellter oder übereinander angeordneter Eier sicherstellen.

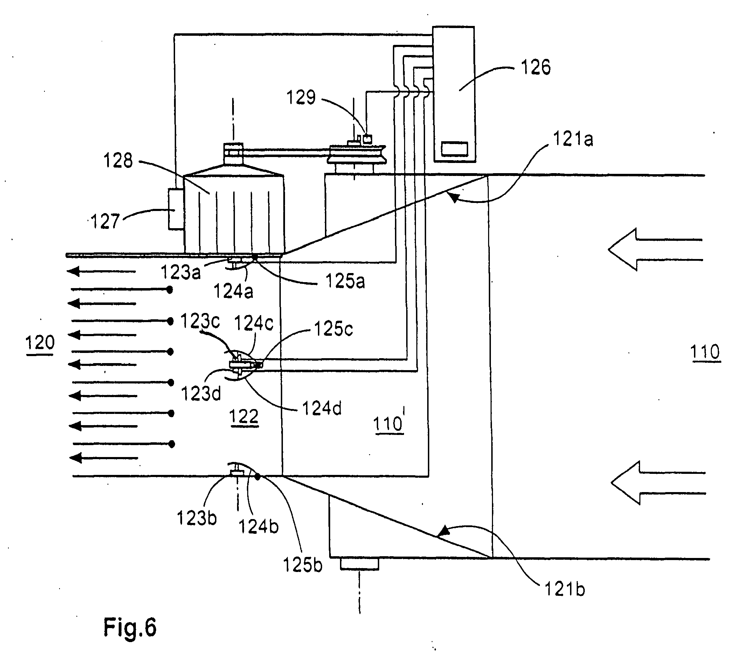

Fig. 6 zeigt eine Variante der Ausführungsform gem. Fig. 4a mit Kraftsensoren. Das Querförderband 110 fördert die Eier über einen Trichtertisch 110' in einen Reaktionsbereich 122 vor einer Packstation 120. Seitenwandelemente 121a,b führen die Eier zusammen und verdichten die Eierverteilung. An den Seitenwandelementen 121a,b ist jeweils ein Druckaufnehmer 123a,b angeordnet, der mit einer halbrunden Ablenk- und Druckaufnahmeplatte 124a,b gekoppelt. Die Druckaufnahmeplatte 124a,b ist jeweils in einem auf der zur Förderrichtung weisenden Seite angeordneten Gelenklager 125a,b schwenkbar gelagert und kann hierdurch freibeweglich eine von den Eiern ausgeübte Druckkraft auf den Druckaufnehmer 123a,b übertragen.

Zentral im Reaktionsbereich 122 sind zwei weitere Drucksensoren 123c,d als Inselanordnung platziert, die wiederum mittels zweier halbrunder Druckaufnahmeplatten 124c,d, die schwenkbar in einem gemeinsamen Schwenklager 125c gelagert sind, um den horizontalen Eierdruck im zentralen Bereich aufzunehmen. Durch die Verwendung vierer Druckaufnehmer an voneinander beabstandeten Orten mit unterschiedlicher Messrichtung wird sichergestellt, dass auch lokale Verdichtungen der Eierverteilung mit unzulässig hohen Horizontalkräften erfasst werden und die Querbandfördergeschwindigkeit entsprechend geregelt werden kann.

Die Druckaufnehmer 123a-d sind mit einer zentralen Querförderbandsteuerung 126 verbunden, die ihrerseits mit einem Frequenzumformer 127 gekoppelt ist, der den Antriebsmotor 128 für die Querbandförderung ansteuert.

Ein Taktgeber 129 ist ebenfalls mit der zentralen Steuereinheit 126 verbunden und gibt den Fortschritt des Querförderbands an.

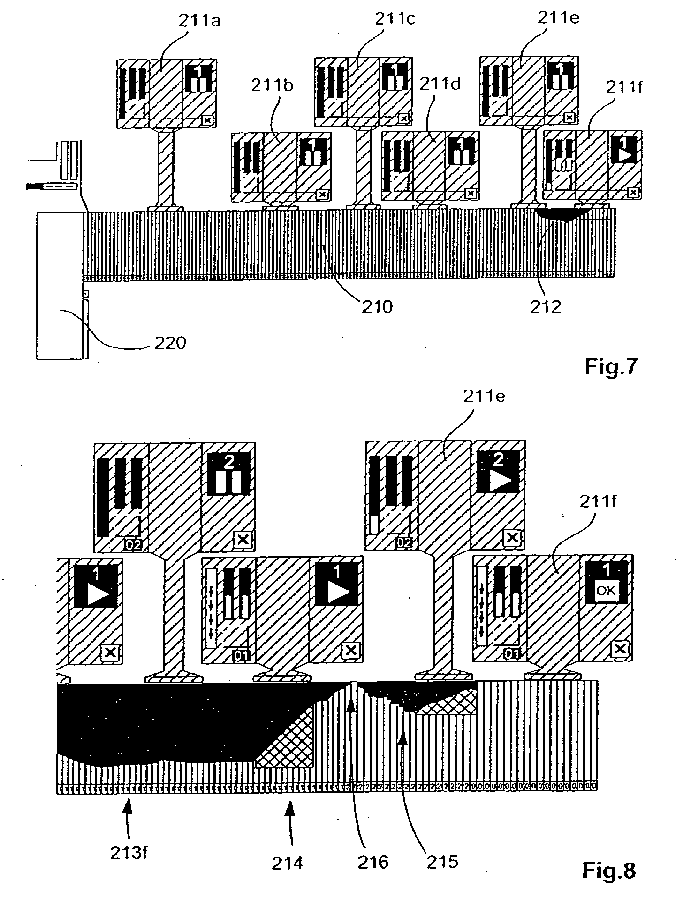

Fig. 7 zeigt ein Beispiel einer Visualisierung der Auslastung und des Fortschritts des Querförderbands. Das Querförderband 210 ist in eine Vielzahl von Querstreifen unterteilt, von denen jeweils einer eine Querförderbandlänge von 1m repräsentiert.

Entlang des Querförderbands münden sechs Längsförderbänder 211a-f an beabstandeten Orten auf das Querförderband 210. Die Längsförderbänder werden durch Kastensymbole 211a-f dargestellt, in denen Parameter zu den Fördereigenschaften des Längsförderbands abgebildet sind.

An der linken Stirnseite mündet das Querförderband 210 in eine Packstation 220.

Fig. 7 zeigt einen Förderanordnungszustand, in dem vor einem kurzen Zeitraum mit der Sammlung vom Längsförderband 211 begonnen wurde. Dies wird durch schwarze Balken in den Querförderbandbereichen in Förderrichtung hinter der Einmündung des Längsförderbands 211f dargestellt. Der schwarze Balkenbereich 212 symbolisiert die auf dem Querförderband abgelegten Eier. Weiterhin symbolisiert ein schraffierter Rechteckbereich in dem Mündungsbereich des Längsförderbands 211f die dem Längsförderband 211f zugewiesene Querförderbandbreite.

Fig. 8 zeigt die Anordnung gem. Fig. 7 zu einem späteren Zeitpunkt des Fördervorgangs. Das Querförderband nimmt in einem auf einem Sollwert aufgefüllten Bereich 213 Eier in einer Querförderbandkapazität von 80% auf, was einen Sicherheitsabstand zur Vollauslastung einhält. In einem Bereich 214 ist das Auslaufen der Sammlung der ersten Gruppe von Eiern zu erkennen, was durch eine diagonal abnehmende Auslastung der Querförderbandbreite erkennbar ist. In Förderrichtung hinter der ersten Gruppe folgt eine zweite Gruppe von Eiern, die durch Aktivierung des Längsförderbands 211e auf das Querförderband aufgebracht wird. Zwischen der Gruppe 213,214 und der Gruppe 215 ist eine Lücke 216 gelassen, welche einen kurzen Zeitraum für eine Umrüstung der Packstation 220 lässt.

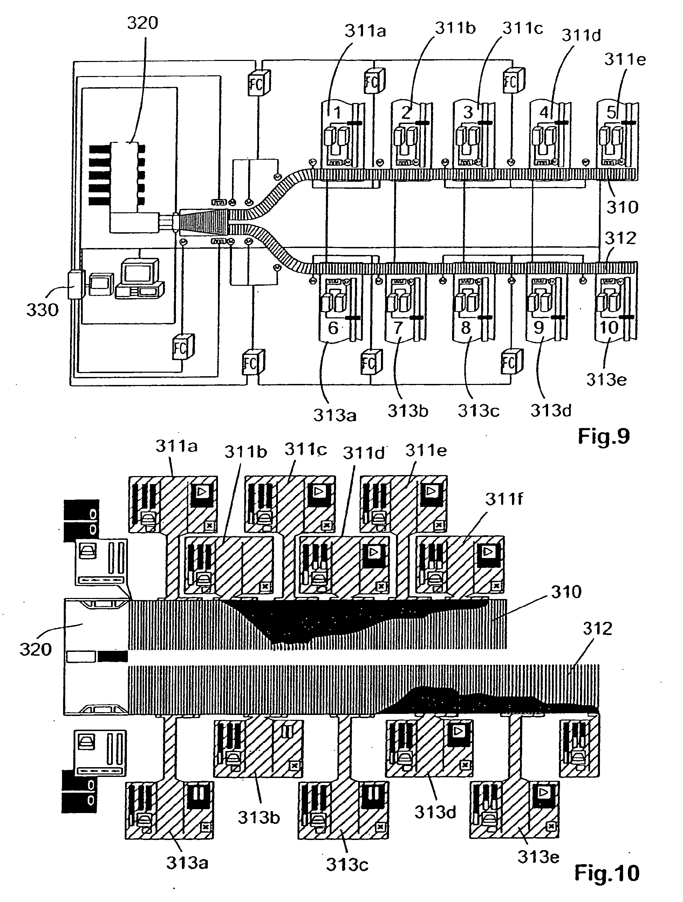

Fig. 9 zeigt eine schematische Draufsicht auf eine Förderanordnung mit zwei Querförderbändem 310,312 und Fig. 10 zeigt eine schematische Darstellung der Visualisierung dieser Förderanordnung. Wie erkennbar ist, sind an jedem Querförderband 310,312 mehrere Längsförderbänder 311a-e,313a-e angeordnet, die an beabstandeten Orten auf das Querförderband 310 bzw. 312 einmünden. Jedes Längsförderband 311a-e,313a-e verfügt über eine eigene dezentrale Steuerung, die in Abhängigkeit eines Wiegesensors gem. Fig. 3 das Längsförderband ansteuert und auf Befehl einer übergeordneten zentralen Steuerung 330 eine Gesamtentleerung des Längsförderbands auf das entsprechende Querförderband veranlasst.

Beide Querförderbänder 310,312 münden in eine Packstation 320.

Wie aus Fig. 10 erkennbar, sind die auf dem Querförderband gesammelten Eier lokal versetzt aufgebracht aus vier aktivierten Längsförderern 311c-f und werden als zusammenhängender Block in der Kapazität der Packstation 320 der Packstation 320 zugeführt. Auf dem Querförderband 312 sind lediglich die Längsförderbänder 313d-f aktiv und erst nach weiterem Fortschritt des Querförderbands 312 werden die weiteren Längsförderbänder 313a-c zugeschaltet.

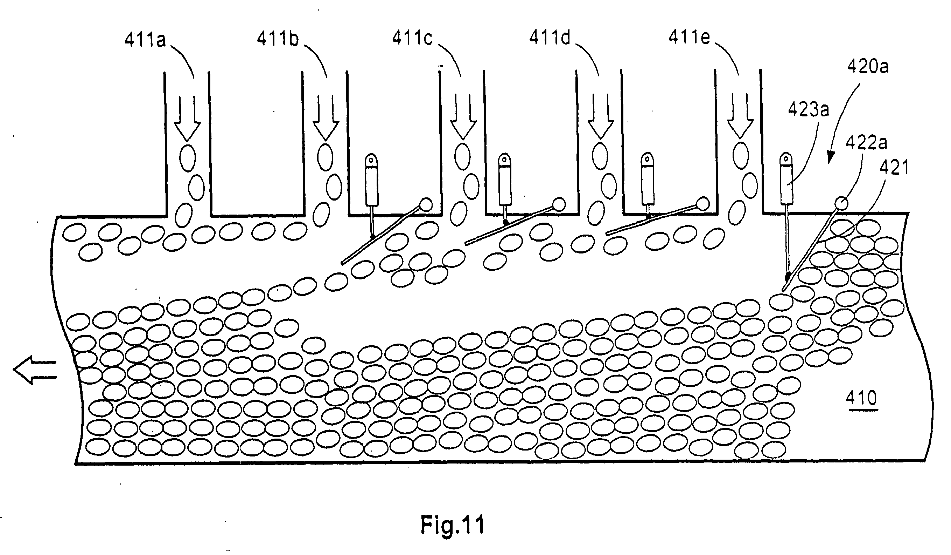

Fig. 11 zeigt einen Ausschnitt eines Querförderbands 410 mit mehreren einmündenden Längsförderbändern 411a-e, deren Einmündungsorte in Förderrichtung des Querförderbands 410 voneinander beabstandet sind. Auf dem Querförderband werden in Förderrichtung F eine Vielzahl von Eiern gefördert, die durch Kreise auf dem Querförderband symbolisiert sind.

Wie ersichtlich, gelangen die Produkte am in Querförderbandrichtung gesehen rechten Rand in den abgebildeten Ausschnitt des Querförderbands und würden daher die Zuleitung weiterer Eier aus den Längsförderbändern 411a-e behindern, da diese zunächst mit einem erheblichen Horizontaldruck die bereits auf dem Querfördeband befindlichen Eier in Richtung des in Förderrichtung des Querförderbands gesehen linken Randes drücken müssten. Hierbei können Beschädigungen der Eier auftreten.

Vor dem in Förderrichtung des Querförderbands zuvorderst gelegenen Längsförderband 411e ist eine Eileitvorrichtung 420a angeordnet, die eine Eileitplatte 421 a umfasst, die in einem seitlich und ortsfest gelagerten Schwenklager 422a schwenkbar gelagert ist. Die Eileitplatte 421 a kann mittels eines Aktuators, der in diesem Fall ein elektrischer Linearantrieb 423a mit Stellungsrückmeldung ist, in den Bereich oberhalb des Querförderbands eingeschwenkt werden oder aus diesem Bereich herausgeschwenkt werden.

In gleicher Weise und analog aufgebaut sind zwischen den Längsförderbändern 411 d und e, zwischen den Längsförderbändern 411 c und d und zwischen den Längsförderbändern 411b und c jeweils eine Eileitvorrichtung 420b und d angeordnet, die in gleicher Weise aufgebaut sind wie die Eileiteinrichtung 420a.

Im dargestellten Förderzustand werden zu den bereits auf dem Querförderband befindlichen Eiern noch weitere Eier aus den Längsförderbändern 411 a,b und d,e gefördert. Um in diesem Förderzustand eine Beschädigung der zusätzlichen zugeförderten Eier oder der bereits auf dem Querförderband befindlichen Eier zu vermeiden, ist die Eileitvorrichtung 420a soweit in den Bereich oberhalb des Querförderbands hineingeschwenkt, dass die Eier vom rechten an den linken Rand abgeleitet werden und hierdurch Platz für die zusätzlich hinzukommenden Eier aus den Längsförderbändern 411a,b,d,e geschaffen wird. Die Eileitvorrichtungen 420b und c sind nicht ausgeschwenkt.

Die Eileitvorrichtung 420d ist um einen geringeren Betrag als die Eileitvorrichtung 420a ausgeschwenkt, um die zusätzlich aus den Längsförderbändern 411d,e hinzugekommenen Eier vom rechten Rand des Querförderbands wegzuleiten und somit Platz für die aus den Längsförderbändern 411a,b hinzugetretenen Eier zu schaffen, ohne hierbei den gesamten Eierstrom des Querförderbands zu weit in Richtung des linken Randes des Querförderbands zu leiten, so dass Beschädigungen an den bereits auf dem Querförderband befindlichen Eiern verursacht würden.

Die elektrischen Linearantriebe 423a-d und die Stellungsrückmeldungseinheiten dieser Antriebe der Eileitvorrichtungen 420a-d sind mit der zentralen Steuerungsvorrichtung gekoppelt und werden in Abhängigkeit der Anzahl der bereits auf dem Querförderband befindlichen Eier und der Anordnung und gegebenenfalls Förderrate der zusätzlich hinzufördernden Längsförderbänder betätigt und soweit ausgefahren, dass weder eine Beschädigung der abgeleiteten Eier noch eine Beschädigung der hinzutretenden Eier auftreten kann.

Ein bevorzugtes Förderverfahren funktioniert wie folgt:

Zu einem Zeitpunkt etwa drei Stunden nach Legebeginn wird das am weitesten von der Packstation entfernte Längsförderband 311f aktiviert und fördert die Eier auf das Querförderband 310. Das Querförderband 310 wird ebenfalls aktiviert und fördert die Eier in Richtung der Packstation. Sobald die vom Längsförderband 311f auf das Querförderband gebrachten Eier die Einmündung des Längsförderbands 311 e erreichen, wird auch das Längsförderband 311 e aktiviert und fördert Eier auf das Querförderband 310. Auf diese Weise summieren sich die Eier der beiden Längsförderbänder 311 e,f zu einer aufsummierten Querförderbandbreite. Sobald dieser Bereich die Einmündung des Längsförderbands 311d erreicht, wird auch dieses Längsförderband aktiviert u.s.w. bis zur Aktivierung des Längsförderbands 311a. Auf diese Weise wird in voller Breite des Querförderbands eine Auslastung erreicht und zu Arbeitsbeginn der Packer an der Packstation 320 ist das Querförderband voll gefüllt und steht kurz vor der Packstation 320.

Die von jedem Längsförderband zugeführten Eier werden im Bereich der Einmündung der Längsförderbänder gezählt, um eine Kontrolle über die Legeleistung des jeweiligen Stalls bzw. der jeweiligen Volierenreihen zu erhalten. Weiterhin ermöglicht diese Eierzählung eine genaue Bestimmung der auf dem Querförderband befindlichen Eier. Sobald erkannt wird, dass ein Längsförderband eine sehr hohe Anzahl von Eiern enthält, beispielsweise indem bereits bei geringem Längsförderbandvorschub eine hohe Anzahl von Eiern gezählt wird, wird diesem Längsförderband eine größere Querförderbandbreite zugewiesen und den anderen Längsförderbändern eine entsprechend verringerte Breite. Hierdurch wird sichergestellt, dass auch das überdurchschnittlich gefüllt Längsförderband innerhalb eines Zeitraums entleert wird, indem auch die anderen Längsförderbänder entleert werden. Diese dynamische Regelung kann gegebenenfalls weiter angepasst werden, wenn sich andere Längsförderbänder als verspätet oder verfrüht entleert abzeichnen.

Das Verfahren ermöglicht erstmals eine automatische Regelung und Vollauslastung der Packstation in Abhängigkeit der von den einzelnen Längsförderbändern zugeführten Eier und deren individuellem Abstand von der Packstation sowie dem jeweils aktuellen Querförderbandfortschritt.

## Patentansprüche

1. Förderanordnung für stoßempfindliche Produkte, insbesondere für Eier, umfassend:
- eine Fördervorrichtung (11a, 12a; 10) zum Fördern der Produkte,
- einen Zwischenspeicherbereich (16', 21'), der ausgebildet ist, um Produkte aufzunehmen, die aufgrund diskontinuierlicher Zufuhr oder Abfuhr temporär zwischenzuspeichern sind,
- eine Steuerungsvorrichtung zum Erhöhen der Abfuhr und/oder zum Verringern der Zufuhr von Produkten in den Zwischenspeicherbereich der Fördervorrichtung, wenn eine vorbestimmte kritische Anzahl von Produkten im Zwischenspeicherbereich überschritten wird,
wobei
- eine Kraftmessvorrichtung (18; 23a,b) bereitgestellt ist, die unterhalb der Produkte im Zwischenspeicherbereich (16') angeordnet ist, um in vertikaler Richtung zu messen und die summierte Gewichtskraft der Produkte im Zwischenspeicherbereich zu erfassen und ausgebildet und angeordnet ist, um eine durch im Zwischenspeicherbereich befindliche Produkte ausgeübte Kraft zu erfassen, die ein Maß für die Anzahl der Produkte im Zwischenspeicherbereich darstellt, und
- die Steuerungsvorrichtung ausgebildet ist, um die von der Kraftmessvorrichtung erfasste Kraft als Eingangsgröße zu verarbeiten und in Abhängigkeit des Kraftwerts die Abfuhr und/oder Zufuhr der Produkte vom/zum Zwischenspeicherbereich zu erhöhen oder zu verringern,
**dadurch gekennzeichnet, dass** entlang des Förderbands mehrere voneinander beabstandete Zwischenspeicherbereiche angeordnet sind und die Steuerungsvorrichtung so ausgebildet ist, dass das Förderband bei einem erstmaligen Überschreiten einer vorbestimmten summierten Gewichtskraft der Produkte in einem Zwischenspeicherbereich um die Länge des Zwischenspeichers weitergefördert wird, bei einem nachfolgenden Überschreiten einer vorbestimmten summierten Gewichtskraft der Produkte im Zwischenspeicherbereich nochmals um die Länge des Zwischenspeichers weitergefördert wird, sich dieser Vorgang gfs wiederholt bis zu einer vorbestimmten Wiederholungsanzahl, bei der ein mit Produkten belegter Abschnitt des Förderbands in einen benachbarten Zwischenspeicherbereich gefördert würde und bei der stattdessen das Förderband solange angetrieben wird, bis die Produkte vom Förderband auf eine zweite Fördervorrichtung oder in einen Speicherraum gefördert sind.

2. Förderanordnung nach Anspruch 1,
**dadurch gekennzeichnet, dass** die Steuerungsvorrichtung ausgebildet ist, um die Fördervorrichtung mit einer ersten und einer zweiten Fördergeschwindigkeit anzusteuern, wobei die zweite Geschwindigkeit höher ist als die erste Geschwindigkeit.

3. Förderanordnung nach Anspruch 1 oder 2,
**dadurch gekennzeichnet, dass** die Steuerungsvorrichtung ausgebildet ist, um die Fördervorrichtung stufenlos in Abhängigkeit der von der Kraftmessvorrichtung erfassten Kraft einzustellen.

4. Förderanordnung nach einem der vorhergehenden Ansprüche,
**dadurch gekennzeichnet, dass** die Steuerungsvorrichtung ausgebildet ist, um bei Überschreiten eines vorbestimmten Kraftwerts die Abfuhr aus dem Zwischenspeicherbereich zu erhöhen.

5. Förderanordnung nach Anspruch 1 oder 2,
**dadurch gekennzeichnet, dass** die Kraftmessvorrichtung mit einer horizontal angeordneten Wiegeplatte (16) gekoppelt ist, die unterhalb eines Förderbands (11a) angeordnet ist, auf dem die Produkte im Zwischenspeicherbereich (16') angeordnet sind.

6. Förderanordnung nach dem vorhergehenden Anspruch 5 oder 6,
**dadurch gekennzeichnet, dass** die Steuerungsvorrichtung ausgebildet ist, um die Fördervorrichtung aus einem Stillstand heraus bei Überschreiten einer vorbestimmten summierten Gewichtskraft der Produkte im Zwischenspeicherbereich so anzusteuern, dass die Produkte soweit weitergefördert werden, dass alle Produkte aus dem Zwischenspeicherbereich gefördert werden.

7. Förderanordnung nach dem vorhergehenden Anspruch,
**dadurch gekennzeichnet, dass** die Fördervorrichtung ein Förderband umfasst, auf dem sich der Zwischenspeicherbereich um eine bestimmte Länge erstreckt, und die Steuerungsvorrichtung so ausgebildet ist, dass das Förderband bei Überschreiten einer vorbestimmten summierten Gewichtskraft der Produkte im Zwischenspeicherbereich um genau die Länge des Zwischenspeichers weitergefördert wird.

8. Förderanordnung nach einem der vorhergehenden Ansprüche,
**dadurch gekennzeichnet, dass** mehrere Förderbänder mit jeweils zumindest einem Zwischenspeicherbereich angeordnet sind, dass zumindest ein Zwischenspeicherbereich einen Kraftsensor zum Messen der Gewichtskraft der Produkte in diesem Zwischenspeicherbereich umfasst und die Steuerungsvorrichtung so ausgebildet ist, dass alle Förderbänder bei einem Überschreiten einer vorbestimmten summierten Gewichtskraft der Produkte in diesem Zwischenspeicherbereich um die Länge des Zwischenspeichers weitergefördert wird.

9. Förderanordnung nach dem vorhergehenden Anspruch,
**dadurch gekennzeichnet, dass** mehrere Förderbänder mit jeweils zumindest einem Zwischenspeicherbereich angeordnet sind, dass zumindest mehrere Zwischenspeicherbereiche einen Kraftsensor zum Messen der Gewichtskraft der Produkte in diesem Zwischenspeicherbereich umfassen und die Steuerungsvorrichtung so ausgebildet ist, dass alle Förderbänder um die Länge des Zwischenspeichers weitergefördert werden, wenn die Gewichtskraft der Produkte in einem Zwischenspeicherbereich mit Kraftsensor oder der Mittelwert der Gewichtskraft der Produkte in allen Zwischenspeicherbereichen mit Kraftsensor eine vorbestimmte Gewichtskraft der Produkte überschreitet.

10. Förderanordnung nach einem der vorhergehenden Ansprüche, umfassend
- ein Querförderband (10), welches Produkte zu einer Verarbeitungsstation fördert, und
- mehrere Längsförderbänder (11a-d, 12a-d) , die so angeordnet sind, dass sie Produkte an verschiedenen, voneinander beabstandeten Orten auf das Querförderband befördern,
**gekennzeichnet durch** eine Vorrichtung (129) zum Erfassen des Förderfortschritts des Querförderbands und eine mit dieser Vorrichtung gekoppelte Regelungsvorrichtung (30), die ausgebildet ist, um zu Beginn eines Fördervorgangs der Förderanordnung die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang zu setzen.

11. Förderanordnung nach Anspruch 7,
**dadurch gekennzeichnet, dass** zumindest zwei Gruppen von Längsförderbändern definiert sind und die Regelungsvorrichtung ausgebildet ist, um die Produkte der Längsförderbänder einer ersten Gruppe auf dem Querförderband vor den Produkten der Längsförderbänder einer zweiten Gruppe anzuordnen.

12. Verwendung einer Förderanordnung, umfassend:
- eine Fördervorrichtung (11a, 12a; 10) zum Fördern der Produkte,
- einen Zwischenspeicherbereich (16', 21'), der ausgebildet ist, um Produkte aufzunehmen, die aufgrund diskontinuierlicher Zufuhr oder Abfuhr temporär zwischenzuspeichern sind,
- eine Steuerungsvorrichtung zum Erhöhen der Abfuhr und/oder zum Verringern der Zufuhr von Produkten in den Zwischenspeicherbereich der Fördervorrichtung, wenn eine vorbestimmte kritische Anzahl von Produkten im Zwischenspeicherbereich überschritten wird,
wobei
- eine Kraftmessvorrichtung (18; 23a,b) bereitgestellt ist, die ausgebildet und angeordnet ist, um eine durch die im Zwischenspeicherbereich befindlichen Produkte ausgeübte Kraft zu erfassen, die ein Maß für die Anzahl der Produkte im Zwischenspeicherbereich darstellt, und
- die Steuerungsvorrichtung ausgebildet ist, um die von der Kraftmessvorrichtung erfasste Kraft als Eingangsgröße zu verarbeiten und in Abhängigkeit des Kraftwerts die Abfuhr und/oder Zufuhr der Produkte vom/zum Zwischenspeicherbereich zu erhöhen oder zu verringern, bei der die Kraftmessvorrichtung (18) unterhalb der Produkte im Zwischenspeicherbereich (16') angeordnet ist, um in vertikaler Richtung zu messen und die summierte Gewichtskraft der Produkte im Zwischenspeicherbereich zu erfassen
zum Fördern von Eiern auf einem Längsförderband, auf dem eine Mehrzahl voneinander beabstandeter, ortsfester Zwischenspeicherbereiche ausgebildet ist, die so angeordnet sind, dass sie die in Nestbereichen in einer Reihe entlang des Längsbands angeordneten Käfigen gelegten Eier aufnehmen.

13. Verfahren zum Fördern von Eiern im Bereich eines mehrere Käfigeinheiten umfassenden Stalles, mit den Schritten:
a. Zwischenspeichern der in einem ersten Nestbereich eines Käfigs oder einem ersten Käfig gelegten Eier auf einem ersten Zwischenspeicherbereich eines stillstehenden Förderbands,
b. Messen der summierten Gewichtskraft der im ersten Zwischenspeicherbereich befindlichen Eier,
c. Weiterfördern des Längsförderbands um eine vorbestimmte Distanz, die so bemessen ist, dass ein nicht mit Eiern belegter Förderbandabschnitt als erster Zwischenspeicherbereich bereitgestellt wird,
d. Wiederholen der Schritte a bis c bis zu einem Zeitpunkt, zu dem ein Weiterfördern des Längsförderbands um die vorbestimmte Distanz einen durch einen benachbarten, zweiten Zwischenspeicherbereich eines Nestbereichs eines benachbarten zweiten Käfigs oder eines zweiten Käfigs bereits mit Eiern belegten Förderbandabschnitt als ersten Zwischenspeicherbereich bereitstellen würde, und
e. Weiterfördern des Förderbands bis die darauf abgelegten Eier vollständig auf ein zweites Förderband oder in einen Speicher übergeleitet worden sind.

14. Verfahren nach Anspruch 13, mit den Schritten
- Fördern von Produkte auf einem Querförderband zu einer Verarbeitungsstation, und
- Zufördern von Produkten mittels mehrerer Längsförderbänder, zu verschiedenen, voneinander beabstandeten Orten auf das Querförderband,
**dadurch gekennzeichnet, dass** der Förderfortschritt des Querförderbands erfasst wird und zu Beginn des Fördervorgangs die Längsförderbänder in Abhängigkeit des Abstands zwischen ihrer Einmündung auf das Querförderband und der Verarbeitungsstation und in Abhängigkeit des Förderfortschritts des Querförderbands zeitversetzt in Gang gesetzt werden.

## Claims

1. Conveyor arrangement for impact-sensitive products, in particular for eggs, comprising:
- a conveyor system (11a, 12a; 10) for conveying the products,
- a temporary storage area (16', 21') designed to accommodate products which need to be temporarily stored during discontinuous conveying in or out,
- a control system for increasing the feed rate of products away from and/or reducing the feed rate of products into the temporary storage area of the conveyor system when a predefined critical number of products is exceeded in the temporary storage area,
- a force measuring device (18, 23a,b) is provided which is disposed underneath the products in the temporary storage area (16') for taking measurements in the vertical direction and detecting the cumulative weight of the products in the temporary storage area and which is designed and disposed so as to detect a force exerted by products disposed in the temporary storage area serving as an indication of the number of products in the temporary storage area, and
- the control system is configured to process the force detected by the force measuring device as an input variable and increase or reduce the feed rate of products away from and/or into the temporary storage area as a function of the force value,
**characterised in that** several temporary storage areas are provided, spaced apart from one another along the conveyor belt, and the control system is configured so that when a predefined cumulative weight of the products in a temporary storage area is first exceeded, the conveyor belt is conveyed forwards by the length of the temporary storage, and when a predefined cumulative weight of the products in the temporary storage area is exceeded a subsequent time, the conveyor belt is conveyed forwards again by the length of the temporary storage, and this procedure is repeated if necessary up to a predefined number of repetitions at which a section of the conveyor belt filled with products would be conveyed to an adjacent temporary storage area and at which, instead, the conveyor belt is driven until the products have been conveyed by the conveyor belt onto a second conveyor system or into a storage area.

2. Conveyor arrangement as claimed in claim 1,
**characterised in that** the control system is configured to activate the conveyor system at a first and a second conveying speed and the second speed is higher than the first speed.

3. Conveyor arrangement as claimed in claim 1 or 2,
**characterised in that** the control system is configured to adjust the conveyor system steplessly as a function of the force detected by the force measuring device.

4. Conveyor arrangement as claimed in one of the preceding claims,
**characterised in that** the control system is configured to increase the feed rate out of the temporary storage area when a predefined force value is exceeded.

5. Conveyor arrangement as claimed in claim 1 or 2, **characterised in that** the force measuring device is coupled with a horizontally disposed weighing plate (16) disposed underneath a conveyor belt (11a) on which the products are disposed in the temporary storage area (16').

6. Conveyor arrangement as claimed in preceding claim 5 or 6,
**characterised in that** the control system is configured to activate the conveyor system from a static state when a predefined cumulative weight of the products in the temporary storage area is exceeded so that the products are conveyed onwards until a11 the products have been conveyed away from the temporary storage area.

7. Conveyor arrangement as claimed in the preceding claim,
**characterised in that** the conveyor system comprises a conveyor belt on which the temporary storage area extends by a specific length, and the control system is configured so that the conveyor belt is conveyed further by exactly the length of the temporary storage when a predefined cumulative weight of the products in the temporary storage area is exceeded.

8. Conveyor arrangement as claimed in one of the preceding claims,
**characterised in that** several conveyor belts are provided, each with at least one temporary storage area, at least one temporary storage area has a force sensor for measuring the weight of the products in this temporary storage area and the control system is configured so that all the conveyor belts are conveyed further by the length of the temporary storage when a predefined cumulative weight of the products in this temporary storage area is exceeded.

9. Conveyor arrangement as claimed in the preceding claim,
**characterised in that** several conveyor belts are provided, each with at least one temporary storage area, at least several temporary storage areas have a force sensor for measuring the weight of the products in this temporary storage area, and the control system is configured so that all of the conveyor belts are conveyed further by the length of the temporary storage area when the weight of the products in a temporary storage area with a force sensor or the mean value of the weight of the products in all the temporary storage areas with a force sensor exceeds a predefined weight of the products.

10. Conveyor arrangement as claimed in one of the preceding claims, comprising:
- a transverse conveyor belt (10) which conveys products to a processing station, and
- several longitudinal conveyor belts (11a-d, 12a-d) which are disposed so that they convey products to different locations on the transverse conveyor belt spaced at a distance apart from one another,
**characterised by** a device (129) for detecting the conveying progress of the transverse conveyor belt and a regulating device (30) coupled with this device which is configured to set the longitudinal conveyor belts in motion with offset timing at the start of a conveying operation of the conveyor arrangement as a function of the distance between their entry points onto the transverse conveyor belt and processing station and as a function of the conveying progress of the transverse conveyor belt.

11. Conveyor arrangement as claimed in claim 7, **characterised in that** at least two groups of longitudinal conveyor belts are defined and the regulating device is configured to place the products of the longitudinal conveyor belts of a first group on the transverse conveyor belt before the products of the longitudinal conveyor belts of a second group.

12. Use of a conveyor arrangement, comprising:
- a conveyor system (11a, 12a; 10) for conveying the products,
- a temporary storage area (16' , 21') , which is designed to accommodate products which have to be temporarily stored during discontinuous conveying in or out,
- a control system for increasing the feed rate of products away from and/or reducing the feed rate of products into the temporary storage area of the conveyor system when a predefined critical number of products in the temporary storage area is exceeded,
and
- a force measuring device (18; 23a,b) is provided, which is designed and disposed so as to detect a force exerted by products disposed in the temporary storage area serving as an indication of the number of products in the temporary storage area, and
- the control system is configured to process the force detected by the force measuring device as an input variable and to increase or reduce the feed rate of the products away from and/or into the temporary storage area as a function of the force value, and the force measuring device (18) is disposed underneath the products in the temporary storage area (16') in order to take measurements in the vertical direction and detect the cumulative weight of the products in the temporary storage area,
for conveying eggs on a longitudinal conveyor belt on which a plurality of stationary temporary storage areas are disposed at a distance apart from one another, disposed so that they accommodate eggs laid in cages in nesting areas disposed in a row along the longitudinal belt.

13. Method of conveying eggs in the region of a chicken run comprising several cage units, comprising the steps of:
a. temporarily storing the eggs laid in a first nesting area of a cage or a first cage on a first temporary storage area of a stationary conveyor belt,
b. measuring the cumulative weight of the eggs disposed in the first temporary storage area,
c. feeding the longitudinal conveyor belt forwards by a predefined distance which is measured so that a conveyor belt portion not carrying eggs is placed in position as a first temporary storage area,
d. repeating steps a to c up to a point at which feeding the longitudinal conveyor belt forwards by the predefined distance would place a conveyor belt portion already filled with eggs by an adjacent second temporary storage area of a nesting area of an adjacent second cage or a second cage in position as a first temporary storage area, and
e. feeding the conveyor belt forwards until the eggs placed on it have been completely transferred onto a second conveyor belt or into a storage.

14. Method as claimed in claim 13, comprising the steps of:
- conveying products on a transverse conveyor belt to a processing station, and
- conveying products by means of several longitudinal conveyor belts to different locations on the transverse conveyor belt spaced at a distance apart from one another, **characterised in that** the conveying progress of the transverse conveyor belt is detected and at the start of the conveying operation the longitudinal conveyor belts are set in motion with offset timing as a function of the distance between their point of entry onto the transverse conveyor belt and processing station and as a function of the conveying progress of the transverse conveyor belt.

## Revendications

1. Dispositif transporteur pour des produits sensibles aux chocs, en particulier pour des oeufs, comprenant :
- un système transporteur (11a, 12a ; 10) servant au transport des produits,
- une zone d'accumulation intermédiaire (16', 21') qui est configurée pour recevoir des produits qui doivent s'accumuler provisoirement en raison d'une alimentation ou d'une évacuation discontinue,
- un dispositif de commande servant à augmenter l'évacuation et/ou à réduire l'alimentation de produits dans la zone d'accumulation intermédiaire du système transporteur lorsque l'on dépasse un nombre critique prédéterminé de produits dans la zone d'accumulation intermédiaire,
dans lequel
- il est mis en oeuvre un dispositif de mesure de force (18 ; 23a,b) qui est agencé sous les produits dans la zone d'accumulation intermédiaire (16'), afin d'effectuer une mesure dans une direction verticale et de détecter le poids cumulé des produits dans la zone d'accumulation intermédiaire, et qui est configuré et agencé afin de détecter une force exercée par des produits se trouvant dans la zone d'accumulation intermédiaire et représentant une mesure pour le nombre des produits dans la zone d'accumulation intermédiaire, et
- le dispositif de commande est configuré pour traiter la force détectée par le dispositif de mesure de force en tant que grandeur d'entrée et, en fonction de la valeur de la force, pour accroître ou réduire l'évacuation des produits de la zone d'accumulation intermédiaire et/ou l'alimentation des produits vers la zone d'accumulation intermédiaire,
**caractérisé en ce que**, le long de la bande transporteuse sont disposées plusieurs zones d'accumulation intermédiaires espacées les unes des autres, et **en ce que** le dispositif de commande est configuré de sorte que, lors d'un premier dépassement d'un poids cumulé prédéfini des produits dans une zone d'accumulation intermédiaire, la bande transporteuse continue d'être déplacée de la longueur de la zone d'accumulation intermédiaire, lors d'un dépassement subséquent d'un poids cumulé prédéfini des produits dans la zone d'accumulation intermédiaire, la bande transporteuse continue à nouveau d'être déplacée de la longueur de la zone d'accumulation intermédiaire, cette procédure se répétant le cas échéant jusqu'à un nombre de répétitions prédéfini pour lequel une section de la bande transporteuse occupée avec des produits a été déplacée dans une zone d'accumulation intermédiaire voisine, et pour lequel la bande transporteuse est entraînée au lieu de cela jusqu'à ce que les produits soient transportés par la bande transporteuse sur un deuxième système transporteur ou dans une salle d'accumulation.

2. Dispositif transporteur selon la revendication 1,
**caractérisé en ce que** le dispositif de commande est configuré pour commander le système transporteur avec une première et une deuxième vitesse de transport, la deuxième vitesse étant plus élevée que la première vitesse.

3. Dispositif transporteur selon la revendication 1 ou 2,
**caractérisé en ce que** le dispositif de commande est configuré pour réguler en continu le système transporteur en fonction de la force détectée par le dispositif de mesure de force.

4. Dispositif transporteur selon l'une quelconque des revendications précédentes,
**caractérisé en ce que** le dispositif de commande est configuré pour accroître l'évacuation en dehors de la zone d'accumulation intermédiaire en cas de dépassement d'une valeur de force prédéfinie.

5. Dispositif transporteur selon la revendication 1 ou 2,
**caractérisé en ce que** le dispositif de mesure de force est couplé à une plaque de pesage (16), agencée horizontalement, sous une bande transporteuse (11a) sur laquelle sont disposés les produits dans la zone d'accumulation intermédiaire (16').

6. Dispositif transporteur selon l'une quelconque des revendications précédentes 5 ou 6, **caractérisé en ce que** le dispositif de commande est configuré pour commander le système transporteur en dehors d'un état d'arrêt en cas de dépassement d'un poids cumulé prédéfini des produits dans la zone d'accumulation intermédiaire de sorte que les produits continuent d'être transportés jusqu'à ce que tous les produits soient transportés en dehors de la zone d'accumulation intermédiaire.

7. Dispositif transporteur selon la revendication précédente,
**caractérisé en ce que** le système transporteur comprend une bande transporteuse sur laquelle la zone d'accumulation intermédiaire s'étend sur une certaine longueur et **en ce que** le dispositif de commande est configuré de sorte que, en cas de dépassement d'un poids cumulé prédéfini des produits dans la zone d'accumulation intermédiaire, la bande transporteuse continue d'être transportée de précisément la longueur de la zone d'accumulation intermédiaire.

8. Dispositif transporteur selon l'une quelconque des revendications précédentes, **caractérisé en ce que** plusieurs bandes transporteuses sont agencées chacune avec au moins une zone d'accumulation intermédiaire, **en ce qu'**au moins une zone d'accumulation intermédiaire comprend un capteur de force servant à mesurer le poids des produits dans cette zone d'accumulation intermédiaire et **en ce que** le dispositif de commande est configuré de sorte que chacune des bandes transporteuses, en cas de dépassement d'un poids cumulé prédéfini des produits dans cette zone d'accumulation intermédiaire, continue d'être déplacée de la longueur de la zone d'accumulation intermédiaire.

9. Dispositif transporteur selon la revendication précédente,
**caractérisé en ce que** plusieurs bandes transporteuses sont agencées chacune avec au moins une zone d'accumulation intermédiaire, **en ce qu'**au moins plusieurs zones d'accumulation intermédiaires comprennent un capteur de force servant à mesurer le poids des produits dans cette zone d'accumulation intermédiaire et **en ce que** le dispositif de commande est configuré de sorte que toutes les bandes transporteuses continuent d'être déplacées de la longueur de la zone d'accumulation intermédiaire lorsque le poids des produits dans une zone d'accumulation intermédiaire dotée d'un capteur de force ou la valeur moyenne des poids des produits dans toutes les zones d'accumulation intermédiaires dotées d'un capteur de force dépasse un poids prédéterminé des produits.

10. Dispositif transporteur selon l'une quelconque des revendications précédentes, comportant
- une bande transporteuse transversale (10) qui transporte des produits vers une station de traitement, et
- plusieurs bandes transporteuses longitudinales (11a-d, 12a-d) qui sont disposées de sorte qu'elles transportent des produits à différents endroits espacés les uns des autres sur la bande transporteuse transversale,
**caractérisé par** un système (129) servant à détecter l'avancement du déplacement de la bande transporteuse transversale et par un système de régulation (30) qui est couplé à ce système et qui est configuré pour, au début d'une opération de déplacement du dispositif transporteur, mettre en marche avec un décalage temporel les bandes transporteuses longitudinales en fonction de l'écart entre leur débouché sur la bande transporteuse transversale et la station de traitement, ainsi qu'en fonction de l'avancement du déplacement de la bande transporteuse transversale.

11. Dispositif transporteur selon la revendication 7,
**caractérisé en ce qu'**au moins deux groupes de bandes transporteuses longitudinales sont définis et **en ce que** le système de régulation est configuré pour disposer les produits des bandes transporteuses longitudinales d'un premier groupe sur la bande transporteuse transversale devant les produits des bandes transporteuses longitudinales d'un deuxième groupe.

12. Utilisation d'un dispositif transporteur, comportant :
- un système transporteur (11a, 12a ; 10) servant au transport des produits,
- une zone d'accumulation intermédiaire (16', 21') qui est configurée pour recevoir des produits qui doivent s'accumuler provisoirement en raison d'une alimentation ou d'une évacuation discontinue,
- un dispositif de commande servant à accroître l'évacuation et/ou à réduire l'alimentation de produits dans la zone d'accumulation intermédiaire du système transporteur lorsqu'un nombre critique prédéfini de produits dans la zone d'accumulation intermédiaire est dépassé,
dans laquelle
- il est mis à disposition un dispositif de mesure de force (18; 23a,b) qui est configuré et disposé pour détecter une force exercée par les produits se trouvant dans la zone d'accumulation intermédiaire et représentant une mesure pour le nombre des produits dans la zone d'accumulation intermédiaire, et
- le dispositif de commande est configuré pour traiter la force détectée par le dispositif de mesure de force en tant que grandeur d'entrée et, en fonction de la valeur de force, pour accroître ou diminuer l'évacuation des produits de la zone d'accumulation intermédiaire et/ou l'alimentation des produits vers la zone d'accumulation intermédiaire, le dispositif de mesure de force (18) étant disposé sous les produits dans la zone d'accumulation intermédiaire (16') afin d'effectuer une mesure dans une direction verticale et afin de détecter le poids cumulé des produits dans la zone d'accumulation intermédiaire,
servant au transport des oeufs sur une bande transporteuse longitudinale sur laquelle est configurée une pluralité de zones d'accumulation intermédiaires fixes, espacées les unes des autres, qui sont disposées de sorte qu'elles reçoivent des oeufs déposés dans des zones de nids dans une rangée de cages disposées le long de la bande longitudinale.

13. Procédé de transport d'oeufs dans la zone d'un poulailler comportant plusieurs unités de cage, comportant les étapes consistant à :
a. accumuler provisoirement des oeufs déposés dans une première zone de nids d'une cage ou dans une première cage sur une première zone d'accumulation intermédiaire d'une bande transporteuse à l'arrêt,
b. mesurer le poids cumulé des oeufs se trouvant dans la première zone d'accumulation intermédiaire,
c. continuer de déplacer la bande transporteuse longitudinale d'une distance prédéterminée qui est mesurée de sorte qu'une section de bande transporteuse ne contenant pas d'oeufs soit mise à disposition en tant que première zone d'accumulation intermédiaire,
d. répéter les étapes a à c jusqu'à ce qu'un autre déplacement de la bande transporteuse longitudinale de la distante prédéterminée mette à disposition une section de bande transporteuse déjà occupée avec des oeufs par le biais d'une deuxième zone d'accumulation intermédiaire voisine d'une zone de nid d'une deuxième cage voisine ou d'une deuxième cage en tant que première zone d'accumulation intermédiaire, et
e. continuer de déplacer la bande transporteuse jusqu'à ce que les oeufs déposés sur celle-ci soient entièrement transférés sur une deuxième bande transporteuse ou dans un dépôt.

14. Procédé selon la revendication 13, comportant les étapes consistant à :
- transporter des produits sur une bande transporteuse transversale vers une station de traitement, et
- transporter des produits au moyen de plusieurs bandes transporteuses longitudinales vers différents lieux espacés les uns des autres sur la bande transporteuse transversale, **caractérisé en ce que** l'avancement du déplacement de la bande transporteuse transversale est détecté et **en ce que**, au début de l'opération de déplacement, les bandes transporteuses longitudinales sont mises en marche avec un décalage temporel en fonction de l'écart entre leur débouché sur la bande transporteuse transversale et la station de traitement, ainsi qu'en fonction de l'avancement du déplacement de la bande transporteuse transversale.
